# EUROPEAN PATENT SPECIFICATION

(11) **EP 4 085 697 B1**
(45) Date of publication and mention of the grant of the patent: **17.07.2024**
(21) Application number: 21713264.6
(22) Date of filing: 25.02.2021
(51) Int. Cl.: H04W 52/32, H04L 5/00, H04W 52/40

(54) **USER EQUIPMENT-AUTONOMOUSLY TRIGGERED-SOUNDING REFERENCE SIGNALS**
BENUTZERGERÄTE-AUTONOM AUSGELÖSTE-KLINGENDE REFERENZSIGNALE
SIGNAUX DE RÉFÉRENCE DE SONDAGE DÉCLENCHÉS DE MANIÈRE AUTONOME PAR UN ÉQUIPEMENT UTILISATEUR

(30) Priority: 05.03.2020 US 202062985794 P
(43) Date of publication of application: 09.11.2022
(73) Proprietor: Google LLC, Mountain View, CA 94043 (US)
(72) Inventor: WANG, Jibing, Mountain View, California 94043 (US); STAUFFER, Erik Richard, Mountain View, California 94043 (US)
(74) Representative: Marks & Clerk GST
(86) International application number: PCT/US2021/019670
(87) International publication number: WO 2021/178214

(56) References cited:
- US-A1- 2015 003 263
- US-B2- 10 462 836

## Description

### BACKGROUND

The evolution of wireless communication to fifth generation (5G) and sixth generation (6G) standards and technologies provides higher data rates and greater capacity, with improved reliability and lower latency, which enhances mobile broadband services. 5G and 6G technologies also provide new classes of services for vehicular, fixed wireless broadband, and the Internet of Things (IoT).

To increase data rates, throughput, and reliability for a user equipment, 5G and 6G systems support various forms of wireless connectivity that use multiple radio links between base stations and the user equipment. Techniques such as dual connectivity or coordinated multipoint communications, often coupled with beamformed signals, can improve the operating performance (*e*.*g*., data rates, throughput, reliability) of the wireless network especially as received signal strengths decrease for the user equipment near the edge of cells.

While these forms of coordinated communications help the performance of the communication exchanges (*e*.*g*., improved data rates, improved throughput, improved reliability), a dynamically changing operating environment can diminish these improvements. To illustrate, consider a scenario in which a first base station and a second base station establish coordinated multipoint communications with a user equipment (UE). Over time, the UE may move out of range of the first and/or second base station to a location with decreased coordinated multipoint communication efficacy.

In some cases, a device selecting the combination of devices participating in the coordinated multipoint communications lacks sufficient information to select an optimal combination of devices. For example, a first base station may select a second base station to participate in the coordinated multipoint communications instead of a third, and more optimal, base station because the first base station lacks sufficient information that indicates signals transmitted by the second base station would reach a target user equipment at a weaker signal strength than signals from the third base station would. Thus, many factors, such as a dynamic operating environment and a lack of information, can lead to diminished performance (*e*.*g*., decreased data rates, decreased data throughput, decreased reliability) of coordinated multipoint communications with a user equipment.

US 10,462,836 B2 states that, by using the concept of coordinated multipoint (CoMP ) transmission, a network may configure a plurality of transmission points (TPs) for a virtual cell, and communicate with a UE using the configured plurality of TPs.

US 2015/003263 A1 relates to uplink measurement using UE centric sounding signals. A TP receives one-to-one mapping information indicating a plurality of UE IDs and a plurality of sounding channels assigned to the corresponding UE IDs. When the TP detects a sounding reference signal (SRS) from a UE, the TP is able to identify the UE using the detected SRS and the one-to-one mapping information. The TP then obtains measurement information for the identified UE.

### SUMMARY

In accordance with the invention, there is provided: a method performed by a user equipment, as recited by claim 1; a method performed by a user equipment, as recited by claim 9; and an apparatus, as recited by claim 15.

This summary is provided to introduce simplified concepts of user equipment-autonomously triggered-sounding reference signals. The simplified concepts are further described below in the Detailed Description. This summary is not intended to identify essential features of the claimed subject matter, nor is it intended for use in determining the scope of the claimed subject matter.

In aspects, a user equipment (UE) maintains a connection to a first base station. In implementations, the UE generates link quality parameters for each broadcast signal in a set of broadcast signals received from a set of base stations and selects one or more base stations to include in an active coordination set (ACS), which may be used to implement a user-centric no-cell (UCNC) type of network architecture. The UE then identifies a sounding reference signal (SRS) air interface resource that corresponds to the selection and requests the inclusion of the selected base stations in the ACS by autonomously transmitting, to the first base station, an uplink SRS using the identified SRS air interface resource. In implementations, the UE communicates over a wireless network using the ACS formed with the selected one or more base stations.

In aspects, a base station allocates sounding reference signal (SRS) air interface resources to a user equipment (UE) for autonomous transmission of an uplink SRS and transmits an indication of the allocated SRS air interface resources to the UE. The base station monitors for transmission of the uplink SRS by monitoring the SRS air interface resources. In implementations, the base station receives the uplink SRS using a first SRS air interface resource of the SRS air interface resources and identifies, based on the first SRS air interface resource, a selection of one or more base stations the UE requests for inclusion in an active coordination set (ACS). The base station then forms the ACS by negotiating with each base station in the selection and, in response to forming the ACS, jointly communicates, over the wireless network, with the UE using the ACS.

### BRIEF DESCRIPTION OF THE DRAWINGS

Aspects of user equipment-autonomously triggered-sounding reference signals are described with reference to the following drawings. The same numbers are used throughout the drawings to reference like features and components:
FIG. 1 illustrates an example wireless network system in which various aspects of user equipment-autonomously triggered-sounding reference signals can be implemented.
FIG. 2 illustrates an example device diagram that can implement various aspects of user equipment-autonomously triggered-sounding reference signals.
FIG. 3 illustrates an air interface resource that extends between a user equipment and a base station and with which various aspects of user equipment-autonomously triggered-sounding reference signals techniques can be implemented.
FIG. 4 illustrates an example environment in which various aspects of user equipment-autonomously triggered-sounding reference signals can be implemented.
FIG. 5 illustrates an example environment in which various aspects of user equipment-autonomously triggered-sounding reference signals can be implemented.
FIG. 6 illustrates an example environment in which various aspects of user equipment-autonomously triggered-sounding reference signals can be implemented.
FIG. 7 illustrates an example environment in which various aspects of user equipment-autonomously triggered-sounding reference signals can be implemented.
FIG. 8 illustrates an example environment in which various aspects of user equipment-autonomously triggered-sounding reference signals can be implemented.
FIGs. 9A and 9B illustrate an example of signaling and control transactions between devices in accordance with aspects of user equipment-autonomously triggered-sounding reference signals techniques.
FIG. 10 illustrates an example method that employs user equipment-autonomously triggered-sounding reference signals in accordance with aspects of the techniques described herein.
FIG. 11 illustrates an example method that employs user equipment-autonomously triggered-sounding reference signals in accordance with aspects of the techniques described herein.

### DETAILED DESCRIPTION

The evolution of wireless communication systems to fifth generation (5G) New Radio (5GNR) and Sixth Generation (6G) technologies provides higher data rates to users. By employing techniques, such as Coordinated MultiPoint (CoMP) over beamformed wireless connections, higher data rates can be provided at the edges of 5G and 6G cells. Conventional techniques, such as neighbor relation tables, can be used to describe neighbor cells of a serving cell that may be potential base stations to include in the CoMP communications. Because of a dynamically changing operating environment, however, the received signal performance at a UE can be impacted by other factors not included in the neighbor relation tables, such as signal interference from other devices, obstructions, and so forth. Thus, the dynamically changing transmission environment can make selecting base stations that optimize an operating performance of the CoMP more difficult.

Various UEs assess the transmission environment by generating link quality metrics and/or parameters on received signals. These metrics not only provide an indication on how well the UE receives signals, but enable the UE to autonomously initiate and request modifications to the transmission environment, such as modifications that address errors identified through the link quality parameters and/or modifications that improve the transmission environment. For instance, by generating and analyzing the link quality parameters, the UE quickly identifies when a current location has a poor transmission environment that negatively affects signal quality, such as an urban canyons (*e*.*g*., buildings), a location with poor weather (*e*.*g*., fog), or a location with disruptive objects (*e*.*g*., trees, nearby electronic devices, other wireless technology, power grid transformers). In implementations of UE-autonomously triggered-SRS, the UE initiates a request to change devices communicating with the UE by autonomously transmitting an uplink SRS that implicitly indicates the change (*e.g.,* a selection of base stations for an ACS). In other words, the UE determines when to request a configuration change (*e*.*g*., participating devices) and initiates a request for the change by transmitting the uplink SRS. This allows the UE to quickly communicate the request by reducing or eliminating communication delays related to waiting for command(s) and/or directions from the base station. This also enables the base station to apply the configuration changes (*e*.*g*., configuring an ACS), which leads to improved data rates, data throughput, and reliability, more quickly.

In aspects, a user equipment (UE) maintains a connection to a first base station. In implementations, the UE generates link quality parameters for each broadcast signal in a set of broadcast signals received from a set of base stations and selects one or more base stations to include in an active coordination set (ACS). The UE then identifies a sounding reference signal (SRS) air interface resource that corresponds to the selection and requests the inclusion of the selected base stations in the ACS by autonomously transmitting, to the first base station, an uplink SRS using the identified SRS air interface resource. In implementations, the UE communicates over a wireless network using the active coordination set formed with the selected one or more base stations.

In aspects, a base station allocates sounding reference signal (SRS) air interface resources to a user equipment (UE) for autonomous transmission of an uplink SRS and transmits an indication of the allocated SRS air interface resources to the UE. The base station monitors for transmission of the uplink SRS by monitoring the SRS air interface resources. In implementations, the base station receives the uplink SRS using a first SRS air interface resource of the SRS air interface resources and identifies, based on the first SRS air interface resource, a selection of one or more base stations the UE requests for inclusion in an active coordination set (ACS). The base station then forms the ACS by negotiating with each base station in the selection and, in response to forming the ACS, jointly communicates, over the wireless network, with the UE using the ACS.

In aspects, an Active Coordination Set (ACS) is a user equipment-specific set of base stations (e.g., 5G and/or 6G base stations) that are determined by the user equipment to be usable for wireless communication. More specifically, the base stations in the ACS are usable for joint transmission and/or reception (which may be otherwise referred to as joint communication or coordinating multipoint (CoMP)) between the user equipment and one or more of the base stations in the ACS. Joint communication includes communication between the user equipment and multiple base stations, or communication between the user equipment and multiple sectors of a single base station. The joint communication includes communication in a single radio frequency band or communication in multiple radio frequency bands. In various implementations, an ACS may be a component of, or used to implement, a user-centric no-cell (UCNC) network architecture.

In implementations, a master base station coordinates joint transmission and/or reception for the UE. The master base station uses the ACS to schedule air interface resources for the set of base stations communicating with the user equipment. By using this joint scheduling for communications with the UE, scheduling efficiency is increased, and inter-cell interference (ICI) is reduced in the wireless network.

As channel conditions change for the user equipment, the user equipment can add or remove base stations from the ACS while concurrently communicating with base stations in the ACS that provide usable link quality. Based on these changes to the ACS, the master base station can add or remove base stations from the joint communication with the user equipment without performing a handover that interrupts data communication with the user equipment. By using the ACS for communication management, the master base station can select optimal routing for data communication with the UE and maintain the highest data throughput for the user equipment without interruptions caused by a handover.

While features and concepts of the described systems and methods for user equipment-autonomously triggered-sounding reference signals can be implemented in any number of different environments, systems, devices, and/or various configurations, aspects of user equipment-autonomously triggered-sounding reference signals are described in the context of the following example devices, systems, and configurations.

### Example Environment

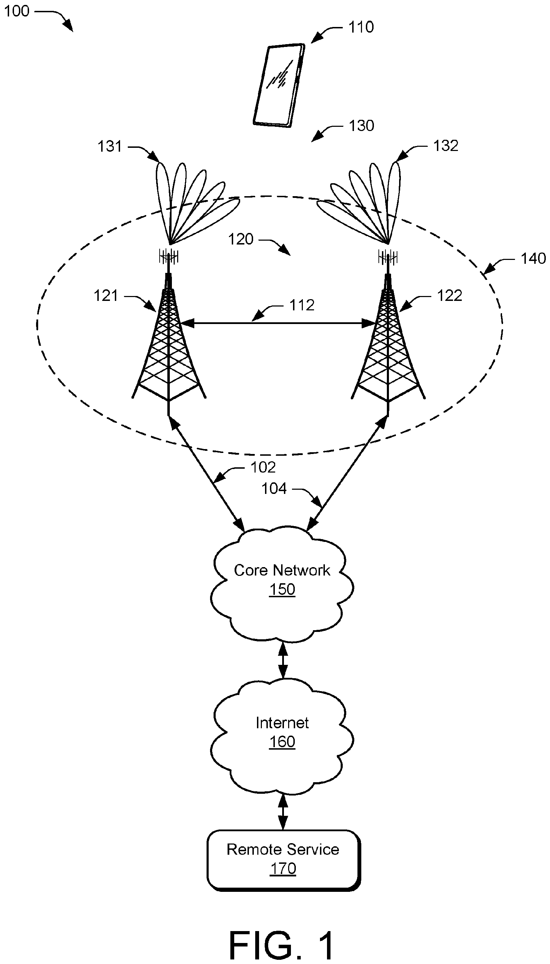

FIG. 1 illustrates an example environment 100 in which various aspects of user equipment-autonomously triggered-sounding reference signals can be implemented. The example environment 100 includes a user equipment 110 (UE 110) that communicates with one or more base stations 120 (illustrated as base stations 121 and 122), through one or more wireless communication links 130 (wireless link 130), illustrated as wireless links 131 and 132. Although illustrated as a smartphone, the user equipment 110 may be implemented as any suitable computing or electronic device, such as a mobile communication device, a modem, cellular phone, gaming device, navigation device, media device, laptop computer, desktop computer, tablet computer, smart appliance, or vehicle-based communication system. The base stations 120 (*e.g.,* an Evolved Universal Terrestrial Radio Access Network Node B, E-UTRAN Node B, evolved Node B, eNodeB, eNB, Next Generation Node B, gNode B, gNB, a 6G Node B, or the like) may be implemented in a macrocell, microcell, small cell, picocell, and the like, or any combination thereof.

The base stations 120 communicate with the user equipment 110 via the wireless links 131 and 132, which may be implemented as any suitable type of wireless link. The wireless links 131 and 132 can include a downlink of control-plane information and user-plane data communicated from the base stations 120 to the user equipment 110, an uplink of other control-plane information and/or user-plane data and communicated from the user equipment 110 to the base stations 120, or both. The wireless links 130 may include one or more wireless links or bearers implemented using any suitable communication protocol or standard, or combination of communication protocols or standards such as 3rd Generation Partnership Project Long-Term Evolution (3GPP LTE), Fifth Generation New Radio (5GNR), 6G, and so forth. Multiple wireless links 130 may be aggregated in a carrier aggregation to provide a higher data rate for the user equipment 110. Multiple wireless links 130 from multiple base stations 120 may be configured for Coordinated Multipoint (CoMP) communication with the user equipment 110. Additionally, multiple wireless links 130 may be configured for single-radio access technology (RAT) (single-RAT) dual connectivity (single-RAT-DC) or multi-RAT dual connectivity (MR-DC).

The base stations 120 are collectively a Radio Access Network 140 (RAN, Evolved Universal Terrestrial Radio Access Network, E-UTRAN, 5GNR RAN or NR RAN). The base stations 121 and 122 in the RAN 140 are connected to a core network 150, such as a Fifth Generation Core (5GC) or 6G core network. The base stations 121 and 122 connect, at 102 and 104 respectively, to the core network 150 via an NG2 interface (or a similar 6G interface) for control-plane signaling and via an NG3 interface (or a similar 6G interface) for user-plane data communications. In addition to connections to core networks, base stations 120 may communicate with each other via an Xn Application Protocol (XnAP), at 112, to exchange user-plane and control-plane data. The user equipment 110 may also connect, via the core network 150, to public networks, such as the Internet 160 to interact with a remote service 170.

### Example Devices

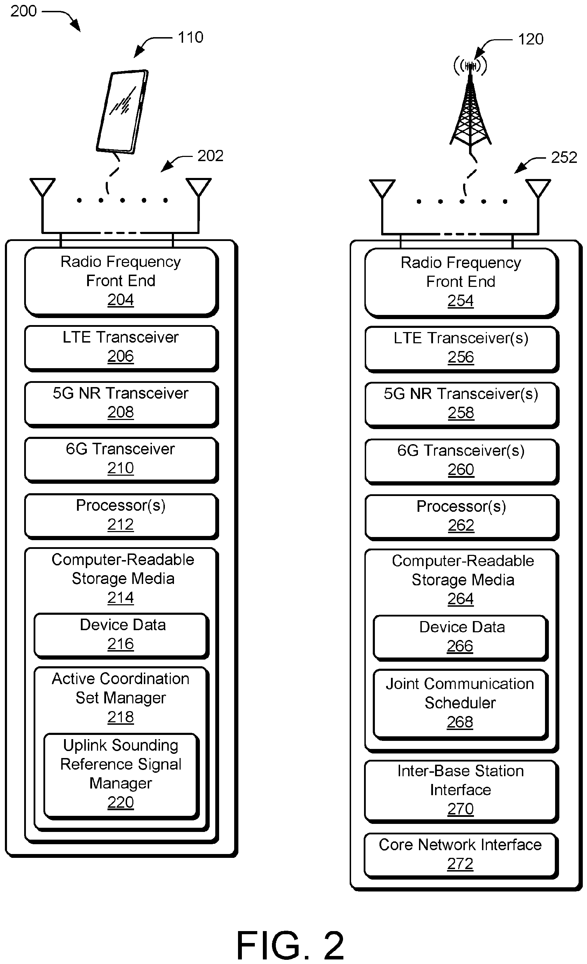

FIG. 2 illustrates an example device diagram 200 of the user equipment 110 and the base stations 120. The user equipment 110 and the base stations 120 may include additional functions and interfaces that are omitted from FIG. 2 for the sake of clarity. The user equipment 110 includes antennas 202, a radio frequency front end 204 (RF front end 204), an LTE transceiver 206, a 5GNR transceiver 208, and a 6G transceiver 210 for communicating with base stations 120 in the RAN 140. The RF front end 204 of the user equipment 110 can couple or connect the LTE transceiver 206, the 5GNR transceiver 208, and the 6G transceiver 210 to the antennas 202 to facilitate various types of wireless communication. The antennas 202 of the user equipment 110 may include an array of multiple antennas that are configured similarly to or differently from each other. The antennas 202 and the RF front end 204 can be tuned to, and/or be tunable to, one or more frequency bands defined by the 3GPP LTE, 5G NR, and 6G communication standards and implemented by the LTE transceiver 206, the 5GNR transceiver 208, and/or the 6G transceiver 210. Additionally, the antennas 202, the RF front end 204, the LTE transceiver 206, the 5GNR transceiver 208, and/or the 6G transceiver 210 may be configured to support beamforming for the transmission and reception of communications with the base stations 120. By way of example and not limitation, the antennas 202 and the RF front end 204 can be implemented for operation in sub-gigahertz (GHz) bands (e.g., below 1 GHz), sub-6 GHz bands (*e*.*g*., below 6 GHz), and/or above 6 GHz bands that are defined by the 3GPP LTE, 5G NR, and 6G communication standards.

The user equipment 110 also includes processor(s) 212 and computer-readable storage media 214 (CRM 214). The processor 212 may be a single core processor or a multiple core processor composed of a variety of materials, such as silicon, polysilicon, high-K dielectric, copper, and so on. The computer-readable storage media described herein excludes propagating signals. CRM 214 may include any suitable memory or storage device such as random-access memory (RAM), static RAM (SRAM), dynamic RAM (DRAM), non-volatile RAM (NVRAM), read-only memory (ROM), or Flash memory useable to store device data 216 of the user equipment 110. The device data 216 includes user data, multimedia data, beamforming codebooks, applications, and/or an operating system of the user equipment 110, which are executable by processor(s) 212 to enable user-plane communication, control-plane signaling, and user interaction with the user equipment 110.

In some implementations, the CRM 214 may also include an active coordination set (ACS) manager 218. The ACS manager 218 can communicate with the antennas 202, the RF front end 204, the LTE transceiver 206, the 5G NR transceiver 208, and/or the 6G transceiver 210 to monitor the quality of the wireless communication links 130. Based on this monitoring, the ACS manager 218 can determine to add or remove base stations 120 from the ACS and/or trigger the transmission of an uplink ACS sounding reference signal.

In some implementations, the ACS manager 218 includes an uplink sounding reference signal manager (uplink SRS manager) 220 that triggers autonomous transmission (*e*.*g*., without receiving a request to transmit) of a sounding reference signal (SRS). At times, the uplink SRS manager 220 identifies an SRS air interface resource that corresponds to a selection or combination of the base stations 120 to add to an existing ACS through updates and/or modifications, or to use in forming and/or establishing a new ACS. The SRS air interface resource can include any combination of resources and/or transmission characteristics, such as air interface resource(s) (*e*.*g*., frequency carriers, frequency bands, time slots, cyclic shift configuration, a transmission and/or timing pattern, modulation and/or coding schemes). The uplink SRS manager 220 indicates the selection by autonomously triggering (*e*.*g*., without transmission timing directions from the base station) the transmission of an uplink SRS using the SRS resource.

The device diagram for the base stations 120, shown in FIG. 2, includes a single network node (*e.g.,* a gNode B). The functionality of the base stations 120 may be distributed across multiple network nodes or devices and may be distributed in any fashion suitable to perform the functions described herein. The base stations 120 include antennas 252, a radio frequency front end 254 (RF front end 254), one or more LTE transceivers 256, one or more 5GNR transceivers 258, and/or one or more 6G transceivers 260 for communicating with the UE 110. The RF front end 254 of the base stations 120 can couple or connect the LTE transceivers 256, the 5G NR transceivers 258, and/or the 6G transceivers 260 to the antennas 252 to facilitate various types of wireless communication. The antennas 252 of the base stations 120 may include an array of multiple antennas that are configured similarly to or differently from each other. The antennas 252 and the RF front end 254 can be tuned to, and/or be tunable to, one or more frequency bands defined by the 3GPP LTE, 5GNR, and 6G communication standards, and implemented by the LTE transceivers 256, one or more 5GNR transceivers 258, and/or one or more 6G transceivers 260. Additionally, the antennas 252, the RF front end 254, the LTE transceivers 256, one or more 5GNR transceivers 258, and/or one or more 6G transceivers 260 may be configured to support beamforming, such as Massive-MIMO, for the transmission and reception of communications with the UE 110.

The base stations 120 also include processor(s) 262 and computer-readable storage media 264 (CRM 264). The processor 262 may be a single core processor or a multiple core processor composed of a variety of materials, such as silicon, polysilicon, high-K dielectric, copper, and so on. CRM 264 may include any suitable memory or storage device such as random-access memory (RAM), static RAM (SRAM), dynamic RAM (DRAM), non-volatile RAM (NVRAM), read-only memory (ROM), or Flash memory useable to store device data 266 of the base stations 120. The device data 266 includes network scheduling data, radio resource management data, beamforming codebooks, applications, and/or an operating system of the base stations 120, which are executable by processor(s) 262 to enable communication with the user equipment 110.

CRM 264 also includes a joint communication scheduler 268. Alternatively, or additionally, the joint communication scheduler 268 may be implemented in whole or part as hardware logic or circuitry integrated with or separate from other components of the base stations 120. In at least some aspects, the joint communication scheduler 268 configures the LTE transceivers 256, the 5GNR transceivers 258, and the 6G transceiver(s) 260 for communication with the user equipment 110, as well as communication with a core network, such as the core network 150, and routing user-plane data and/or control-plane information for joint communication. Additionally, the joint communication scheduler 268 may allocate air interface resources and schedule communications for the UE 110 and base stations 120 in the ACS when the base station 120 is acting as a master base station for the base stations 120 in the ACS.

The base stations 120 include an inter-base station interface 270, such as an Xn and/or X2 interface, which the j oint communication scheduler 268 configures to exchange user-plane and control-plane data between other base stations 120, to manage the communication of the base stations 120 with the user equipment 110. The base stations 120 include a core network interface 272 that the joint communication scheduler 268 configures to exchange user-plane data and control-plane information with core network functions and/or entities.

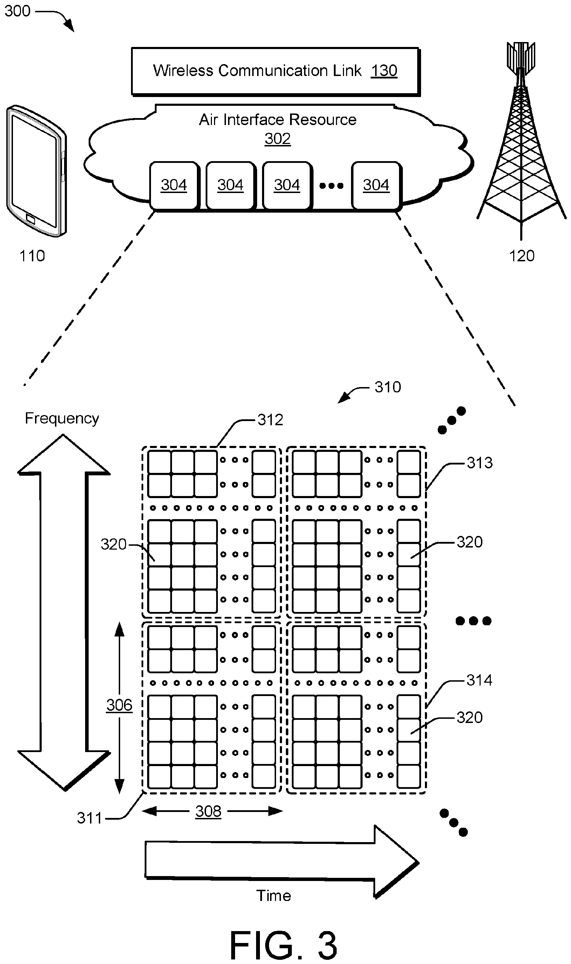

FIG. 3 illustrates an air interface resource that extends between a user equipment and a base station and with which various aspects of user equipment-autonomously triggered-sounding reference signals can be implemented. The air interface resource 302 can be divided into resource units 304, each of which occupies some intersection of frequency spectrum and elapsed time. A portion of the air interface resource 302 is illustrated graphically in a grid or matrix having multiple resource blocks 310, including example resource blocks 311, 312, 313, 314. An example of a resource unit 304 therefore includes at least one resource block 310. As shown, time is depicted along the horizontal dimension as the abscissa axis, and frequency is depicted along the vertical dimension as the ordinate axis. The air interface resource 302, as defined by a given communication protocol or standard, may span any suitable specified frequency range, and/or may be divided into intervals of any specified duration. Increments of time can correspond to, for example, milliseconds (mSec). Increments of frequency can correspond to, for example, megahertz (MHz).

In example operations generally, the base stations 120 allocate portions (*e*.*g*., resource units 304) of the air interface resource 302 for uplink and downlink communications. Each resource block 310 of network access resources may be allocated to support respective wireless communication links 130 of multiple user equipment 110. In the lower left corner of the grid, the resource block 311 may span, as defined by a given communication protocol, a specified frequency range 306 and comprise multiple subcarriers or frequency sub-bands. The resource block 311 may include any suitable number of subcarriers (*e.g.,* 12) that each correspond to a respective portion (*e.g.,* 15 kHz) of the specified frequency range 306 (*e.g.,* 180 kHz). The resource block 311 may also span, as defined by the given communication protocol, a specified time interval 308 or time slot (*e*.*g*., lasting approximately one-half millisecond or 7 orthogonal frequency-division multiplexing (OFDM) symbols). The time interval 308 includes subintervals that may each correspond to a symbol, such as an OFDM symbol. As shown in FIG. 3, each resource block 310 may include multiple resource elements 320 (REs) that correspond to, or are defined by, a subcarrier of the frequency range 306 and a subinterval (or symbol) of the time interval 308. Alternatively, a given resource element 320 may span more than one frequency subcarrier or symbol. Thus, a resource unit 304 may include at least one resource block 310, at least one resource element 320, and so forth.

In example implementations, multiple user equipment 110 (one of which is shown) are communicating with the base stations 120 (one of which is shown) through access provided by portions of the air interface resource 302. The joint communication scheduler 268 (shown in FIG. 2) may determine a respective data rate, type of information, or amount of information (*e.g*., control-plane information and/or user-plane data) to be communicated (*e*.*g*., transmitted) by the user equipment 110. For example, the joint communication scheduler 268 can determine that each user equipment 110 is to transmit at a different respective data rate or transmit a different respective amount of information. The joint communication scheduler 268 then allocates one or more resource blocks 310 to each user equipment 110 based on the determined data rate or amount of information.

Additionally, or in the alternative to block-level resource grants, the joint communication scheduler 268 may allocate resource units at an element-level. Thus, the joint communication scheduler 268 may allocate one or more resource elements 320 or individual subcarriers to different user equipment 110. By so doing, one resource block 310 can be allocated to facilitate network access for multiple user equipment 110. Accordingly, the joint communication scheduler 268 may allocate, at various granularities, one or up to all subcarriers or resource elements 320 of a resource block 310 to one user equipment 110 or divided across multiple user equipment 110, thereby enabling higher network utilization or increased spectrum efficiency.

The joint communication scheduler 268 can therefore allocate air interface resource 302 by resource unit 304, resource block 310, frequency carrier, time interval, resource element 320, frequency subcarrier, time subinterval, symbol, spreading code, some combination thereof, and so forth. Based on respective allocations of resource units 304, the joint communication scheduler 268 can transmit respective messages to the multiple user equipment 110 indicating the respective allocation of resource units 304 to each user equipment 110. Each message may enable a respective user equipment 110 to queue the information or configure the LTE transceiver 206, the 5GNR transceiver 208, and/or the 6G transceiver 210 to communicate via the allocated resource units 304 of the air interface resource 302.

### User Equipment-Autonomously Triggered Sounding Reference Signals

In aspects, a UE generates one or more link quality parameters for broadcast signals received from multiple base stations. The UE then selects base stations to include in an ACS by analyzing the link quality parameters. For example, the UE analyzes the link quality parameters to identify base stations with a higher received signal strength at the UE relative to other base stations. In various implementations, the selection of base stations can be used to form a new ACS or modify an existing ACS. The UE then indicates the selection by autonomously transmitting a sounding reference signal (SRS) on a sounding reference signal resource (SRS resource) corresponding to the selection.

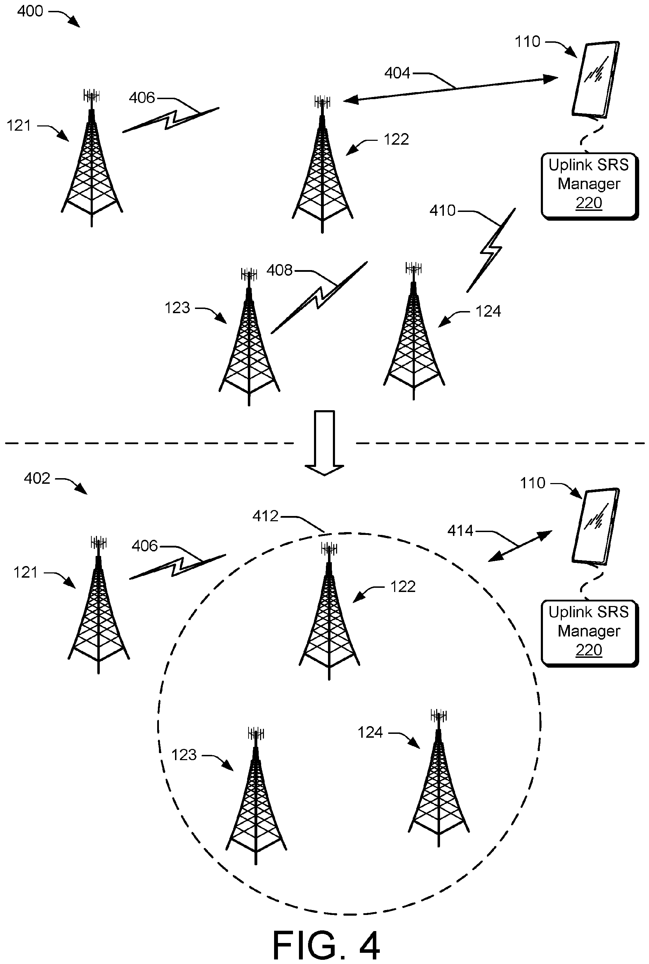

FIG. 4 illustrates an example environment in which aspects of user equipment-autonomously triggered-sounding reference signals can be implemented. Environment 400 corresponds to the example environment at a first point in time and environment 402 corresponds to the example environment at a second, arbitrary point later in time. Thus, the environment 400 and the environment 402, collectively, illustrate aspects of user equipment-autonomously triggered-sounding reference signals in the example environment.

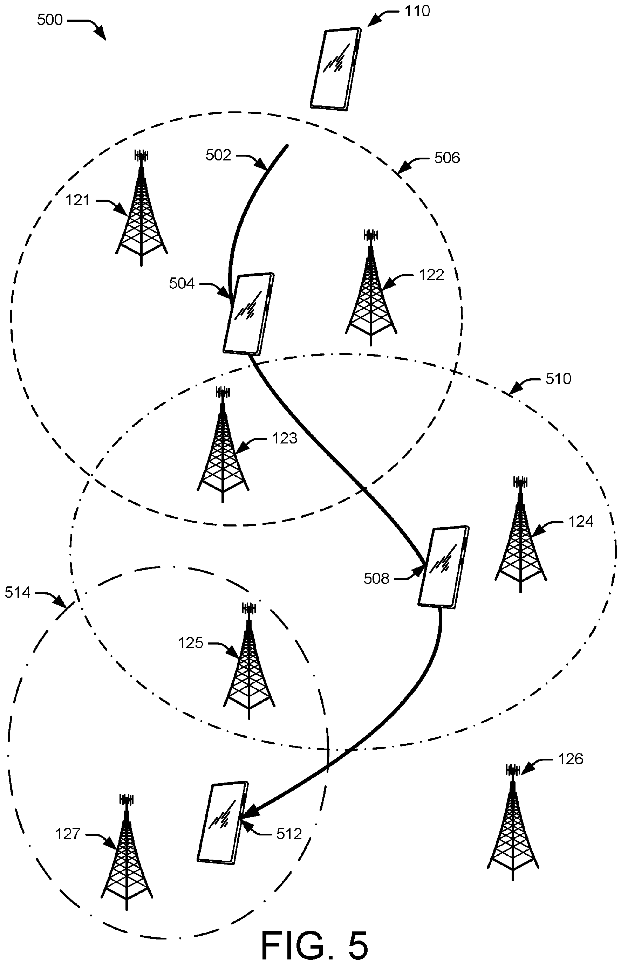

In the environment 400, the UE 110 operates in a single-connectivity mode with the base station 122 in a wireless network, such as RAN 140 of FIG. 1. In other words, the UE 110 maintains a single wireless connection to a single base station (*e*.*g*., base station 122). Alternatively, or additionally, the UE 110 communicates with an ACS that includes the base station 122, such as described with reference to FIG. 5 and/or the environment 402 of FIG. 4. For example, the base station 122 acts as a master base station in an ACS specific to the UE 110 and the connection maintained between the base station 122 and the UE 110 corresponds to a connection with an ACS.

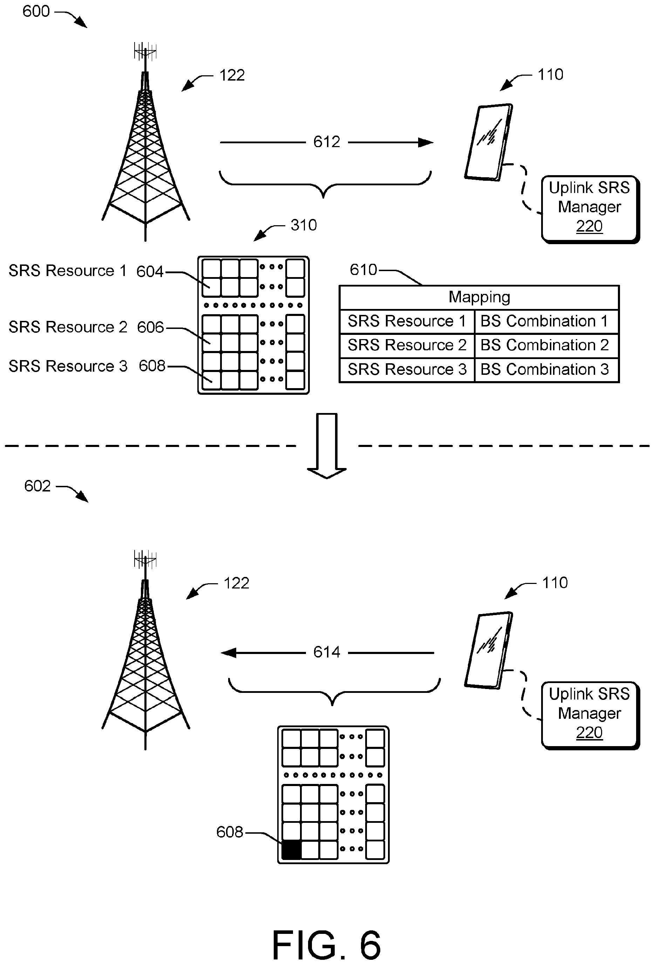

In the environment 400, the UE 110 and the base station 122 exchange information with one another through link 404. In various implementations, the link 404 corresponds to wireless link 132 of FIG. 1. As one example, the UE 110 transmits an uplink SRS using the link 404. As another example, the base station 122 sends autonomous-sounding reference signal (autonomous-SRS) parameters to the UE 110 through the link 404, such as SRS air interface resource allocation information, SRS air interface resource mappings, threshold values, transmit port assignment for SRS transmission, and so forth, as further described with reference to FIGs. 6 to 8. As yet another example, the UE 110 and the base station 122 exchange any combination of control-plane information and/or user-plane data.

The environment 400 also includes the base station 121, the base station 123, and the base station 124. Each base station transmits a respective signal, labeled as broadcast signal 406, broadcast signal 408, and broadcast signal 410, respectively. For example, base stations transmit a downlink sounding reference signal or a broadcast channel (BCH) that the UE 110 uses to identify the presence of the base stations.

To illustrate, in one or more implementations, the UE 110 measures and/or generates link quality parameters on each respective broadcast signal, such as a reference signal receive power (RSRP) metric, a received signal strength indicator (RSSI) metric, or a reference signal received quality (RSRQ). The UE 110 then analyzes, by way of the uplink SRS manager 220 of FIG. 2, the link quality parameters and/or metrics to identify a selection of base station(s) to include in an ACS. For example, with reference to FIG. 6, the UE 110 compares each respective link quality parameter, such as an RSRP metric, to a threshold value. If the respective link quality metric meets or exceeds the threshold value, the UE selects the respective base station as a candidate to include in the ACS. The threshold value can be either static or dynamic. As an example, a dynamic value can reflect 80% of the current link quality parameter of the strongest base station currently in the ACS.

After identifying the selection of base station(s), and determining to initiate a change request, the UE 110 autonomously transmits an uplink SRS using an SRS air interface resource that reflects the combination of base stations (e.g., the combination of base stations with a respective link quality metric above the threshold value). For example, as described with reference to FIG. 6, a base station allocates SRS air interface resources to the UE for the uplink SRS transmission and forwards an indication of the allocation to the UE. In implementations, the base station allocates the SRS air interface resources without providing designated transmission times to the UE that indicate when the UE should transmit the uplink SRS. In other words, instead of the base station directing the UE on when to transmit the uplink SRS using the SRS air interface resources, the UE 110 makes the determination on when to transmit the uplink SRS, such as in response to identifying the transmission environment has degraded and/or identifying changes that may improve the transmission environment.

To illustrate, the UE 110 determines to autonomously transmit the uplink SRS based on determining that the single connection with the base station 122 has degraded below an acceptable threshold (*e*.*g*., below a static threshold). Consequently, the UE 110 autonomously transmits an uplink SRS that does not indicate the base station 122. As another example, and with reference to FIG. 5, the UE determines, while communicating over a wireless network using an ACS, to autonomously transmit the uplink SRS based on identifying that a base station currently not included in the ACS has a link quality parameter with better performance relative to another base station included in the ACS (*e*.*g*., above a dynamic threshold). Thus, rather than receiving a command from the base station to transmit the uplink SRS, the UE 110 autonomously transmits the uplink SRS based on analyses performed at the UE.

In implementations, to transmit the uplink SRS, the uplink SRS manager 220 identifies an SRS air interface resource that corresponds to the selection of a previously-determined set of base stations. In response to identifying the SRS air interface resource, the uplink SRS manager 220 initiates the transmission of the uplink SRS using the identified SRS air interface resource. The correlation between an SRS air interface resource and a combination of base stations can be determined in any suitable manner. In at least one implementation, the base station 122 sends a message to the UE 110 that includes an allocation of SRS air interface resources and/or mappings to combinations of base stations as described with reference to FIG. 6.

In implementations, the base station monitors the SRS air interface resources allocated to the UE. This allows the base station to identify when the UE autonomously transmits an uplink SRS to the base station. To illustrate, since the UE autonomously transmits the uplink SRS without receiving a command from the base station (*e*.*g*., an SRS transmit command), the base station needs to avoid missing a reception of the uplink SRS since a transmission time and/or window is unknown to the base station. To avoid missing the reception, the base station continuously and/or periodically monitors the allocated SRS air interface resources to identify when a transmission using the resource(s) occurs. As one example, the base station allocates a particular frequency carrier and/or time slot to the UE for uplink SRS transmissions based on the allocation of SRS air interface resources made by the base station. In response to notifying the UE of these allocations, the base station continuously and/or periodically monitors the frequency carrier and/or time slot to identify when the air interface resources are in use (*e*.*g*., when the UE transmits an uplink SRS). The base station, for instance, configures a receiver to receive signals at a particular frequency carrier assigned as an SRS air interface resource, and monitors for power at the frequency carrier. Alternatively, or additionally, the base station monitors the frequency carrier at particular time slots. When the base station detects that the frequency carrier and/or time slot is in use (*e*.*g*., the base station senses energy on the carrier), the base station identifies the transmission of the uplink SRS, and the SRS air interface resource used for the transmission. Thus, in implementations, the base station successfully receives the uplink SRS transmission by monitoring known SRS air interface resources allocated to the UE and identifying when the SRS air interface resources are in use.

In response to receiving the uplink SRS, such as through the link 404, the base station 122 identifies the selection of base station(s) requested by the UE based on SRS air interface resource(s) used to receive the uplink SRS. For instance, as described with reference to FIG. 6, a mapping assigns each SRS air interface resource to a respective combination of base stations, and the base station accesses the mapping to identify the combination of base stations using the SRS air interface resources used to receive the uplink SRS.

Continuing to the environment 402, the base station 122 forms an active coordination set 412 (ACS 412) and jointly communicates with the UE 110 using link 414, where the link 414 generally represents signal(s) used for joint communications, such as a first downlink signal from the base station 122, a second downlink signal from the base station 123, and a third downlink signal from the base station 124. For instance, each base station transmits identical information using identical signaling (*e*.*g*., same time, same frequency, same coding, but potentially different spatial beams) on respective downlink signals to the UE to perform the joint communications. Alternatively, or additionally, the link 414 represents a single uplink signal from the UE 110 to all base stations included in the ACS 412 to provide for signal-level joint reception by the base stations. In some implementations, the link 414 includes multiple uplink signals, such as a first uplink signal to the base station 122, a second uplink signal to the base station 123, and a third uplink signal to the base station 124.

The ACS 412 includes the base station 122, the base station 123 and the base station 124, where the base station 122 acts as a master base station that coordinates the joint communications with the other base stations 123, 134 in the ACS. The ACS 412 omits the base station 121 based on input from the UE 110 through the SRS air interface resource used to transmit the uplink SRS. To illustrate, in implementations where the master base station (*e*.*g*., base station 122) forms a new ACS, the base station 122 excludes the base station 121 from the coordination process. Alternatively, or additionally, in other implementations, the master base station modifies an existing ACS by removing the base station 121 from the existing ACS (when relevant). Thus, the ACS 412 corresponds to the selection of base stations indicated by the UE 110. In various implementations, the ACS 412 may be a component of, or used to implement, a UCNC network architecture.

In implementations, and in response to determining the selection of base stations from the SRS resource, the base station 122 coordinates the formation (or modification of) the ACS 412 by negotiating with the selected base stations. As one example, the base station 122 exchanges ACS configuration messages with the base station 123 and base station 124 using the Xn and/or X2 interfaces 112 of FIG. 1, such as sending command(s) to each base station that direct the base stations to join the ACS 412, receiving acknowledgements from the base stations that confirm the command(s), sending UE 110 identification information to the base stations, sending transmission parameters (*e*.*g*., supported frequency bands, timing information, modulation schemes) to the base stations, sending UE capabilities to the base stations, etc.

FIG. 5 illustrates an example environment 500, in which aspects of user equipment-autonomously triggered-sounding reference signals may be implemented, and in which a UE 110 measures the link quality of candidate base stations 120 to determine which base stations 120 to include in an ACS. This can include modifying an existing ACS and/or initiating the formation of an ACS. Implementations described with reference to the environment 500 can be combined with any other aspects described with reference to FIGs. 1 to 4.

In the example environment 500, the UE 110 is moving through a radio access network (RAN) that includes multiple base stations 120, illustrated as base stations 121-127. These base stations may utilize different technologies (*e*.*g*., LTE, 5G NR, 6G) at a variety of frequencies (*e*.*g*., sub-gigahertz, sub-6 GHz, and above 6 GHz bands and sub-bands).

As the user equipment 110 follows a path 502 through the RAN 140, the user equipment 110 measures the link quality of base stations that are currently in the ACS and/or candidate base stations that the UE 110 evaluates, such as by periodically measuring broadcast signals as described with reference to FIG. 4. In implementations, the UE 110 autonomously triggers transmission of an uplink SRS to initiate modifications to an existing ACS and/or initiate the formation of a new ACS.

To illustrate, consider a scenario in which the UE participates in joint communications associated with an ACS. At position 504 on the path 502, the UE 110 communicates over the wireless network using an ACS 506 that includes the base stations 121, 122, and 123. For example, similar to that described in the environment 402 of FIG. 4, the UE 110 receives jointly-transmitted (CoMP) signals from the base stations 121, 122, and 123. Alternatively, or additionally, the UE 110 transmits an uplink signal that each base station in the ACS 506 receives and jointly processes using joint reception. Thus, at position 504, the UE 110 communicates using an ACS, where multiple receiving devices collectively process communications to and/or from the UE 110. In some implementations, the ACS 506 may be a component of, or used to implement, a UCNC network architecture.

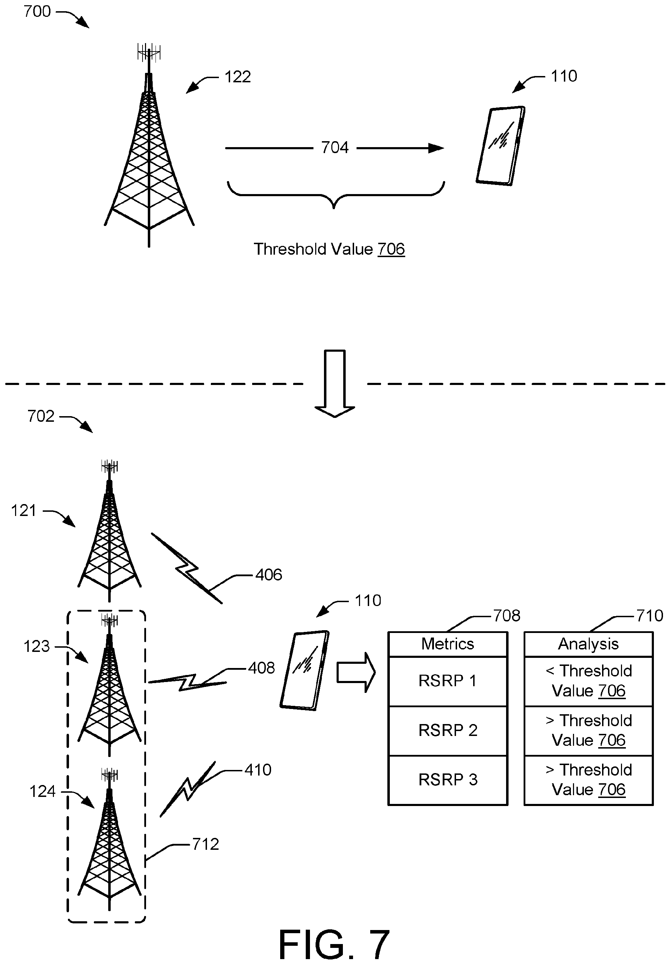

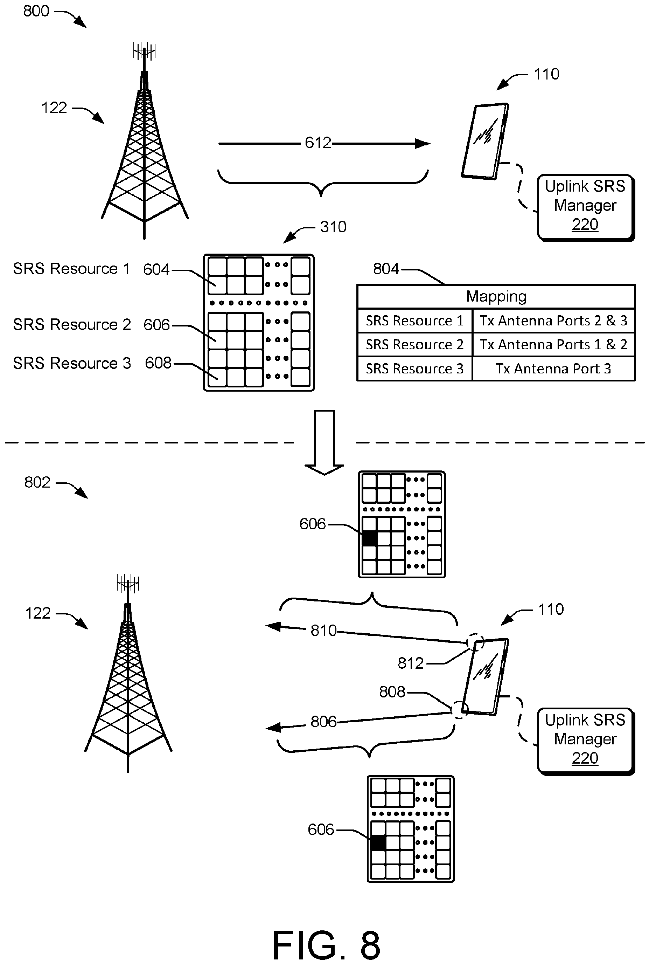

As part of these communications, a master base station, such as the base station 122, transmits autonomous-SRS parameters to the UE 110 that are used to autonomously trigger transmission of an uplink SRS. For instance, the UE 110 receives, from the master base station, an allocation of SRS air interface resources and base station combination mappings as described with reference to FIG. 6, threshold values as described with reference to FIG. 7, and/or antenna port mappings as described with reference to FIG. 8.

As the UE 110 continues to move, at position 508, the UE 110 autonomously triggers transmission of an uplink SRS to request a selection of base stations to include in an ACS specific to the UE at this time and location. In some implementations, the UE 110 bases the selection of base stations on observed broadcast signals and/or an analysis of link quality parameters. For example, the UE 110 measures a received signal strength of broadcast signals (*e*.*g*., downlink SRS) received from various base stations, and determines the selection of base stations by selecting base stations that have a received signal strength at or above a threshold value. At the position 508, the UE 110 selects a combination of base stations that includes the base stations 123, 124 and 125 and omits the base stations 121 and 122. The UE 110 then transmits an uplink SRS using an SRS air interface resource that indicates the selection (*e*.*g*., the base station 123, the base station 124, and the base station 125). For example, the UE 110 transmits the uplink SRS using an SRS resource, identified in the autonomous-SRS parameters received at the position 504, to a master base station (e.g., the base station 122) coordinating the ACS 506.

In response to receiving the uplink SRS transmitted at the position 508, various implementations form an ACS 510 that includes the base station 123, the base station 124, and the base station 125 form the ACS 510. For example, a master base station (*e.g.,* base station 122) of the current ACS (*e.g*., the ACS 506) receives the uplink SRS, identifies the selection of base stations indicated by the UE 110, and coordinates the modifications to the current ACS to form the new ACS (*e*.*g*., ACS 510). In various implementations, the formation of the new ACS (*e*.*g*., ACS 510) corresponds to a modification of the current ACS insofar as the current ACS and the new ACS are specific to the UE 110 and have differences from one another, such as changes in the participating base stations. To illustrate, the modifications correspond to removing one or more base stations (*e*.*g*., the base stations 121 and 122) from the ACS specific to the UE 110 at position (and time) 504, and/or adding one or more base stations (*e*.*g*., the base stations 124 and 125) to the ACS specific to the UE 110 at position (and time) 508.

In some implementations, modifying an ACS specific to a UE includes changing a master base station that coordinates joint communications for the ACS. Consider, for example, a scenario in which the base station 122 acts as a current master base station to the ACS 506. In modifying the ACS 506 to form the ACS 510, the base station 122 selects a base station, such as base station 123, to act as a new master base station form the ACS 510 based on location information, signal strength information, supported core networks, and so forth. In implementations, the base station 122 requests and/or directs with the base station 123 to act as the new master base station, such as by exchanging commands, acknowledgements, configuration information, and so forth, through the Xn and/or X2 interfaces 112 of FIG. 1.

At times, the current master base station and/or the new master base station collectively coordinate the modifications to the ACS. For example, prior to directing the base station 123 to act as the new master base station, the current master base station (*e.g.,* base station 122) removes base stations (*e*.*g*., base station 121) and/or adds new base stations (*e*.*g*., base stations 124 and 125) to the ACS specific to the UE 110, such as by sending respective commands to the base stations. As another example, the current master base station indicates, to the new master base station, which base station(s) to remove and which base station(s) to add to the ACS, and the new master base station manages modifying what base stations are included and excluded from the ACS. In yet another example, the current master base station removes base station(s) from the ACS, and the new master base station adds base station(s) to the ACS. As further described, in various implementations, the modifications to the ACS can be coordinated through messaging between the base stations using the Xn and/or X2 interfaces 112 of FIG. 1. Coordinating the modifications, at times, includes an exchange of information, such as exchanging UE capabilities associated with the UE 110, exchanging UE identification information, sending commands to join or leave an ACS, receiving acknowledgements, exchanging configuration information, and so forth.

In modifying the ACS 506 to form the ACS 510, various implementations transmit new autonomous-SRS parameters to the UE 110. For example, similar to that described at the position 504, the base station 123, acting as the new master base station for the ACS 510, determines (and allocates) SRS air interface resources to the UE 110, identifies combinations of base stations, maps the combinations of base stations to the SRS air interface resources, and so forth.

Continuing along the path 502, the UE 110, at position 512, autonomously triggers transmission of a second uplink SRS based on observed broadcast signals at the position 512. Similar to that described with respect to the ACS 506 and the ACS 510, this results in the formation of the ACS 514 that modifies the ACS 510 by removing the base stations 123 and 124 from the ACS and adding the base station 127 to the ACS. In some implementations, the formation of the ACS 514 includes designating a new master base station (*e*.*g*., base station 125) for the ACS specific to the UE (*e.g.,* ACS 514).

### Example Autonomous-SRS parameters for UE-Autonomously Triggered-SRS

FIG. 6 illustrates an example environment in which aspects of user equipment-autonomously triggered-sounding reference signals can be implemented. Environment 600 corresponds to the example environment at a first point in time and environment 602 corresponds to the example environment at a second, arbitrary point later in time. Thus, the environment 600 and the environment 602, collectively, illustrate aspects of user equipment-autonomously triggered-sounding reference signals in the example environment.

The environment 600 and 602 include the base station 122 and the UE 110 of FIG. 1. In the environment 600, the UE 110 maintains a connection with the base station 122. In some implementations, the UE 110 maintains a single wireless connection to the base station 122 as described with reference to the environment 400. Alternatively, or additionally, the UE 110 communicates using an ACS that includes a connection to the base station 122, such as described with reference to FIG. 5 and/or the environment 402 of FIG. 4.

In the environment 600, the base station 122 allocates SRS air interface resources for uplink SRS transmissions from the UE 110. As one example, and referring to the resource block 310 of FIG. 3, the base station 122 designates or allocates resource(s) 604 of the resource block 310 to SRS resource 1, resource(s) 606 of the resource block 310 to SRS resource 2, and resource(s) 608 of the resource block 310 to SRS resource 3. The resources allocated for each SRS air interface resource can correspond to any combination of transmission resources, such as frequency carriers, frequency bands, time slots, cyclic shift configurations, modulation and/or coding schemes, transmission and/or timing patterns, etc., that make each allocated SRS air interface resource distinct from one another. In various implementations, the base station 122 determines what resources to allocate based on communications exchanged with the UE 110. For instance, the base station selects UE-specific SRS air interface resources by analyzing uplink communications received from the UE 110 and determining an estimated location of the UE, such as through an angle of arrival of a signal received from the UE, a received signal strength of the signal received from the UE, a direction of movement of the UE, a velocity of the UE, and so forth. Alternatively, or additionally, the base station 122 analyzes information about neighboring base stations, such as location information or supported core networks. In some implementations, the base station determines an estimated location of the UE and accesses and analyzes historical records that indicate signal measurements or metrics reported by the same or other UEs about base stations within a predetermined distance of the estimated location.

The base station 122 then allocates the SRS resource block 310 based on any combination of information (*e*.*g*., UE characteristics, neighboring base stations, signal metrics) to optimize and/or improve transmissions (*e*.*g*., data rates, throughput, reliability, signal strength) from the UE 110. In one or more implementations, the base station 122 determines combinations of base stations to use in forming an ACS that yields a desired operating performance. As one example, the base station 122 analyzes information that indicates a direction in which the UE is moving, a cell coverage edge that the UE is approaching (exiting or entering), and a base station associated with the cell coverage edge. Based on this information, the base station 122 identifies combinations of base stations that the UE might request in an ACS specific to the UE, such as a first combination that excludes a base station (*e*.*g*., base station 121) for a first scenario in which the UE likely exits the corresponding cell coverage, a second combination that includes a base station (*e*.*g*., base station 123) for a second scenario in which the UE likely enters the corresponding cell coverage, and so forth.

In various implementations, the base station 122 maps combinations of base stations to respective SRS air interface resources, as illustrated by mapping 610. For instance, with reference to FIG. 4, the base station 122 maps SRS resource 1 to a first base station combination (*e*.*g*., base station 121, base station 122, and base station 123), SRS resource 2 to a second base station combination (*e*.*g*., base station 122, base station 123, and base station 124), and SRS resource 3 to a third base station combination (*e*.*g*., base station 123 and base station 124).

In some implementations, the base station 122 generates the mapping 610 by obtaining information about the UE 110. As one example, the base station 122 obtains an estimated location of the UE 110 and identifies a set of base stations within a predefined distance to the UE, such as by querying the base stations through Xn and/or X2 interfaces for location information, and/or by accessing base station location information stored in CRM 264 of FIG. 2.

In some implementations, the base station 122 generates the mapping 610 based on input from the UE. For example, the UE 110 reports signal measurements or metrics about neighboring base stations to the base station 122, and the base station 122 determines the combinations of base stations based on information reported by the UE 110.

As yet another example, the base station 122 queries a server to identify combinations of base stations, such as a core network server and/or an ACS server that stores multiple ACS configurations (*e*.*g*., multiple combinations of base stations). To illustrate, in querying the server, the base station submits the estimated location of the UE 110 to identify combinations of base stations within a predefined distance of the estimated location and/or to access historical reports of signal measurements as further described.

In response to identifying combinations of base station, the base station 122 allocates a respective SRS air interface resource for each combination of base stations. Alternatively, or additionally, the base station 122 generates a mapping that assigns a respective SRS air interface resource to a respective combination of base stations.

In response to allocating the SRS air interface resource and/or the mapping, the base station sends a message 612 to the UE 110, where the message indicates the allocated SRS air interface resources. Alternatively, or additionally, the base station indicates the mapping assigns a respective SRS air interface resource (or combination of SRS air interface resources) to a respective combination of base stations. As one example, the base station 122 sends a Radio Resource Control (RRC) message that indicates the allocated SRS air interface resources and/or the mapping, such as an RRC connection setup message or an RRC connection reconfiguration message.

In the environment 602, the UE 110 autonomously triggers transmission of an uplink SRS. For instance, with reference to FIGs. 4 and 5, the UE 110 generates link quality parameters, analyzes the link quality parameters, and determines that base station 123 and base station 124 meet one or more conditions for forming (or modifying) an ACS specific to the UE 110. The uplink SRS manager 220, for instance, determines that the base station 123 and the base station 124 each have an RSRP metric above a predefined threshold. Accordingly, the UE 110 autonomously transmits an uplink SRS 614 using the SRS air interface resource(s) that correspond to the combination of the base station 123 and base station 124 (*e.g.,* SRS resource 3). Resource(s) 608 of the resource block 310 generally denote an SRS resource allocation and can include any type of air interface resource as further described (*e.g*., frequency, time, transmission pattern, cyclic shift configurations, transmission and/or timing patterns, modulation and/or coding schemes).

FIG. 7 illustrates an example environment in which aspects of user equipment-autonomously triggered-sounding reference signals can be implemented. Environment 700 corresponds to the example environment at a first point in time and environment 702 corresponds to the example environment at a second, arbitrary point later in time. Thus, the environment 700 and the environment 702, collectively, illustrate aspects of user equipment-autonomously triggered-sounding reference signals in the example environment, and can be combined with any other aspects described with reference to FIGs. 1 to 6.

The environment 700 includes the base station 122 and the UE 110 of FIG. 1. In the environment 700, the UE 110 maintains a connection with the base station 122. In some implementations, the UE 110 maintains a single wireless connection to the base station 122 as described with reference to the environment 400. Alternatively, or additionally, the UE 110 communicates using an ACS that includes a connection to the base station 122, such as described with reference to FIG. 5 and/or the environment 402 of FIG. 4.

In the environment 700, the base station 122 sends an indication 704 to the UE 110, where the indication includes a threshold value 706. For example, the base station 122 sends an RRC message, such as message 612 of FIG. 6, that includes the threshold value. Thus, the threshold value can, at times, be included in a message that includes the indication of SRS resource allocations and/or mapping 610. Alternatively, or additionally, base station 122 sends the threshold value using a separate message and/or signaling mechanism than those used to send the SRS resource allocations and/or the mapping 610.

Continuing to the environment 702, the UE 110 generates link quality parameters, denoted metrics 708, based on the broadcast signals 406, 408, and 410 of FIG. 4 received by the UE 110. For example, the UE 110 generates respective RSRP metrics (*e*.*g*., RSRP 1, RSRP 2, RSRP 3) for the respective broadcast signal from each respective base station (*e*.*g*., base station 121, base station 123, and base station 124). The UE 110 then performs an analysis 710 on the metrics 708 based on the threshold value 706, where the UE 110 compares each link quality parameter (*e*.*g*., RSRP metric) to the threshold value. Based on the analysis, the UE 110 determines a selection 712 of base stations with respective link quality parameters that exceed the threshold value. To illustrate, the RSRP metric of base station 121 (*e.g.,* RSRP 1) falls below the threshold value 706, while the RSRP metrics of the base station 123 (*e*.*g*., RSRP 2) and the base station 124 (*e.g.,* RSRP 3) meet or exceed the threshold value. Based on this analysis, the UE 110 selects the base station 123 and the base station 124, as indicated by selection 712, to add to (or modify) an ACS specific to the UE 110. In implementations, the UE 110 indicates the selection 712 by autonomously transmitting an uplink SRS to the base station 122 using the SRS air interface resource corresponding to the selection (*e*.*g*., base station 123 and the base station 124), such as described with reference to FIG. 6.

In some implementations, the UE 110 determines a transmit power of the uplink SRS based upon the analysis 710. Consider an example in which both the RSRP 2 and RSRP 3 metrics exceed the threshold value 706, but the RSRP 2 has a lesser value than RSRP 3. In implementations, the UE 110 selects a transmit power for the uplink SRS based upon the weakest RSRP value in the set of RSRP values (*e*.*g*., the set of selected base stations) in order to transmit signals that reach the base station with the weakest RSRP value. As another example, the UE generates an average link quality power (*e*.*g*., an average RSRP) from a set of link quality parameters from multiple base stations, such as by generating a geometric mean, arithmetic mean, etc. This includes averaging only a subset of link quality parameters (*e*.*g*., only link quality parameters that meet the threshold value), or averaging all detected link quality parameters (*e*.*g*., including link quality parameters that fail to meet the threshold value). The UE then uses the average link quality power to determine the SRS power level. As yet another example, the UE selects a particular target base station, such as based on link quality parameters specific to the target base station, a location of the target base station and/or a projected future location of the UE, etc., and determines the SRS power level using the link quality parameters specific to the target base station.

FIG. 8 illustrates an example environment in which aspects of user equipment-autonomously triggered-sounding reference signals can be implemented. Environment 800 corresponds to the example environment at a first point in time and environment 802 corresponds to the example environment at a second, arbitrary point later in time. Thus, the environment 800 and the environment 802, collectively, illustrate aspects of user equipment-autonomously triggered-sounding reference signals in the example environment, and can be combined with any other aspects described with reference to FIGs. 1 to 7.

The environment 800 includes the base station 122 and the UE 110 of FIG. 1. In the environment 800, the UE 110 maintains a connection with the base station 122. In some implementations, the UE 110 maintains a single wireless connection to the base station 122 as described with reference to the environment 400. Alternatively, or additionally, the UE 110 communicates using an ACS that includes a connection to the base station 122, such as described with reference to FIG. 5 and/or the environment 402 of FIG. 4.

Similar to the environment 600 of FIG. 6, the base station 122 determines and allocates SRS air interface resources (*e*.*g*., SRS resource 1, SRS resource 2, SRS resource 3) for uplink SRS transmissions by the UE 110. In some implementations, the base station 122 includes a mapping that assigns each SRS air interface resource to one or more antenna ports of the UE 110, as indicated by mapping 804. For example, the mapping 804 assigns an uplink SRS transmission that uses SRS air resource 1 to transmit antenna ports 1 & 3, an uplink SRS transmission that uses SRS resource 2 to transmit antenna ports 2 & 3, and an uplink SRS transmission that uses SRS resource 3 to transmit antenna port 3. Thus, the base station 122 maps SRS air interface resources to a single transmit antenna port and/or multiple transmit antenna ports.

In some implementations, the base station 122 generates the antenna port mappings based on information about the UE. For example, the base station 122 receives a UE capabilities information element (IE) from the UE 110 that indicates a number of transmit antenna ports and/or a relative location of each antenna port. Similar to the SRS resource allocation, the base station 122 then generates transmit antenna port mappings specific to the UE 110. The antenna port mappings included in the mapping 804 can be in addition to, or in replacement of, the mappings that assign the SRS air interface resources to combinations of base stations. Thus, the mapping 610 and/or the mapping can include SRS resource assignments to transmit antenna ports, base station combinations, or both.

In the environment 800, the base station 122 transmits the mapping 804 in message 612 of FIG. 6. By mapping the SRS air interface resources to specific transmit antenna ports of the UE 110, and by receiving respective uplink SRS transmissions from the respective transmit antenna ports, the base station 122 receives information about the corresponding transmission environment.

To illustrate, consider an example in which the UE 110 and the base station 122 communicate using time-division-duplex (TDD). In some aspects, TDD separates downlink and uplink transmissions using time slots that share a common frequency band. In implementations, the base station 122 assesses an operating performance of the UE 110, corresponding to the frequency band, by measuring (e.g., RSSI or RSRP) received signals from the UE. For instance, in response to receiving and analyzing multiple downlink SRSs, such as those described with reference to FIG. 4, the UE 110 selects a combination of base stations to use in forming or modifying an ACS. The UE 110 then determines to autonomously transmit an SRS uplink signal that indicates the combination of base stations and additionally determines the combination maps to SRS resource 2, such as from information included in the mapping 610. Based on the mapping 804 and/or the mapping 610 of FIG. 6 (not illustrated in FIG. 8), the UE 110 transmits an uplink SRS 806 on a first antenna port 808, and an uplink SRS 810 on a second antenna port 812, where each uplink SRS uses resource 606, as illustrated in the environment 802. The base station 122 receives each uplink SRS and generates link quality parameters that indicate an operating performance associated with the frequency band of the corresponding uplink SRS as well as the specific transmit port used by the UE 110 to transmit the uplink SRS. The base station then uses this information to adjust how to transmit future downlink communications (*e*.*g*., multiple input, multiple output (MIMO) transmissions) corresponding to the same frequency bands and/or receive antenna (assuming reciprocity of the receive and transmit antennas) to improve how the UE 110 receives the future downlink communications.

### Signaling and Control Transaction Diagram

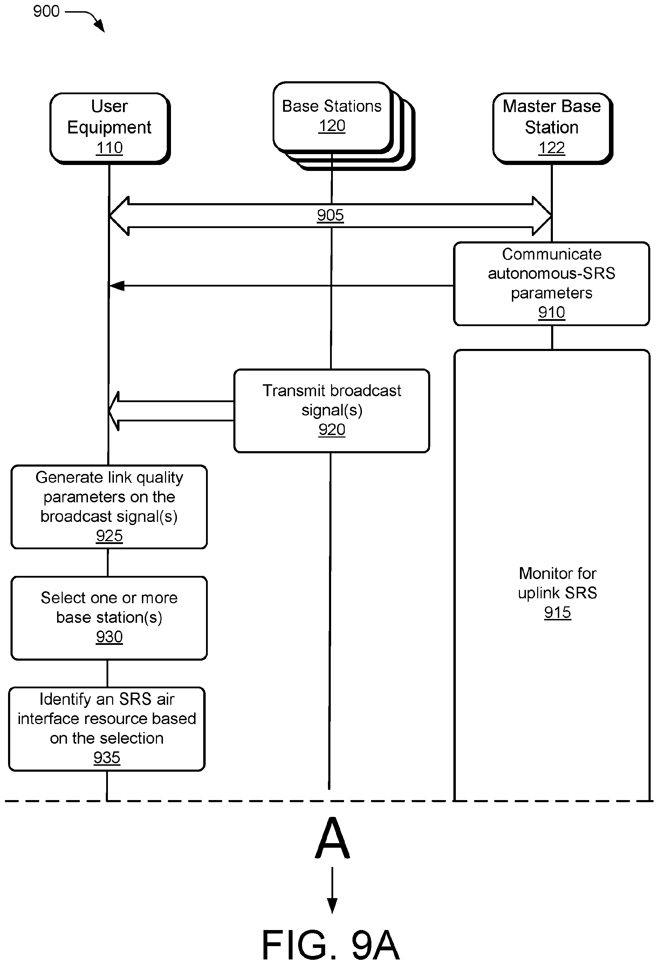

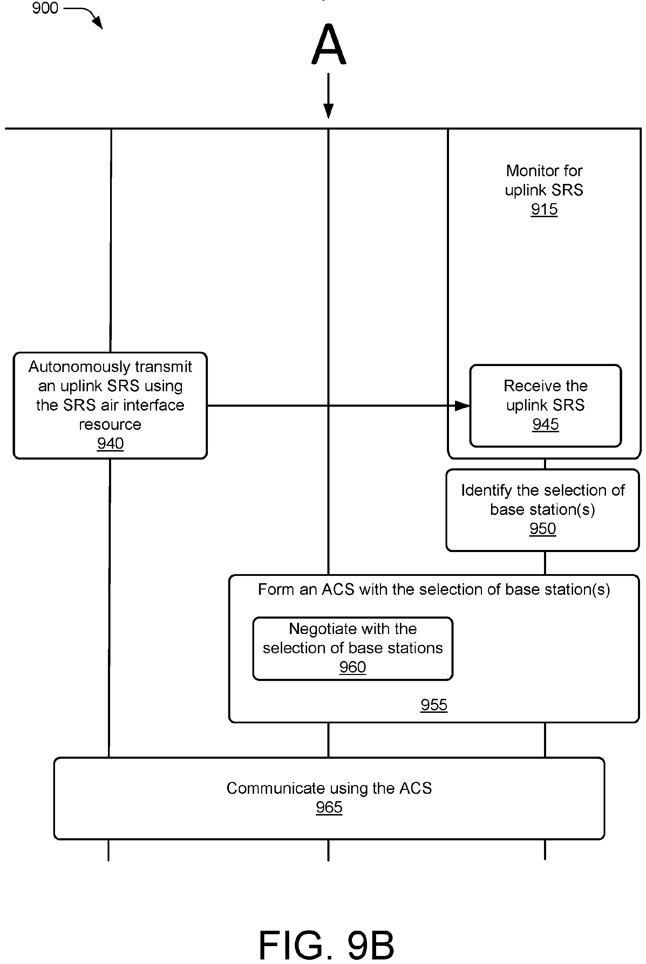

FIGs. 9A and 9B illustrate an example control transactions diagram 900 among various network entities, such as a UE, a first base station, and/or multiple other base stations, in accordance with various aspects of user equipment-autonomously triggered-sounding reference signals. For example, the signaling and control transaction diagram 900 may be performed by instance(s) of the base station 120 and the UE 110 of FIG. 1, such as those described with reference to FIGs. 1-8.

At 905, the UE 110 and a master base station 122 establish and maintain connectivity with one another. As one example, and similar to that described with reference to the environment 400 of FIG. 4, the UE 110 maintains a single wireless connection to the base station 122 as described with reference to the environment 400. Alternatively, or additionally, the UE 110 communicates using an ACS that includes a connection to the base station 122, such as described with reference to FIG. 5 and/or the environment 402 of FIG. 4.

At 910, the base station 122 communicates autonomous-SRS parameters to the UE 110. For instance, the base station 122 communicates any combination of SRS resource allocations, SRS resource mappings to base station combinations, SRS resource mappings to antenna ports, and threshold values as described with reference to FIGs. 6 to 8. In implementations, the base station communicates the autonomous-SRS parameters using RRC message(s), such as an RRC configuration message or an RRC reconfiguration message. At times, the base station 122 determines the autonomous-SRS parameters based on characteristics about the UE 110, such as based on a direction in which the UE 110 is moving, such as that described with reference to FIG. 6.

In various implementations, the base station 122 determines combinations of base stations that the UE might use to form an ACS that yields a desired operating performance, such as from UE location information, neighboring base station information, historical reports with signal measurements or metrics reported by the same or other UEs about the neighboring base stations, and so forth. In determining the combinations of base stations, the base station can determine combinations that include base stations currently participating in an ACS specific to the UE and/or base station(s) currently omitted from the ACS specific to the UE. In various implementations, the base station 122 determines a threshold value that indicates an acceptable performance level of a link quality metric, such an acceptable received signal strength. This can include determining a threshold value based on UE capabilities (*e*.*g*., a threshold value specific to the UE). Subsequently, UE 110 uses the threshold value to measure the performance of base stations and select base stations for an ACS based on the measured performance.

In response to communicating the autonomous-SRS parameters, the base station 122 monitors the SRS air interface resources for one or more uplink SRS transmissions from the UE at 915. To illustrate, the base station monitors the autonomous-SRS parameters communicated at 910 (*e*.*g*., frequency carriers, frequency bands, time slots, cyclic shift configuration, transmission and/or timing patterns, modulation and/or coding schemes) to identify when the UE 110 has autonomously transmitted an uplink SRS. Since the UE 110 autonomously transmits an uplink SRS (*e*.*g*., without receiving a command from the base station that directs the UE when in time to transmit the uplink SRS), the base station 122 continuously and/or periodically monitors the various air interface resources for the uplink SRS(s). This can include monitoring for the uplink SRS(s) in parallel with other operations.

At 920, one or more base stations transmit broadcast signals within a detectable range of the UE 110. In other words, the UE 110 receives at least one of the broadcast signals transmitted at 920, such as broadcast signal 406, broadcast signal 408, and broadcast signal 410 of FIG. 4. In various implementations, the broadcast signals are downlink sounding reference signals (SRSs).

At 925, the UE 110 generates one or more link quality parameter(s) of the broadcast signal(s). The UE 110, for instance, generates RSRP metrics, RSSI metrics, or RSRQ metrics. In response to generating the link quality parameter(s), the UE 110 selects one or more base station(s) to include in an ACS at 930. To illustrate, the UE 110 compares a respective RSRP metric to a threshold value received at 910, and selects, for inclusion in the ACS, base stations with respective RSRP metrics above the threshold value. Alternatively, or additionally, the UE 110 determines to remove base stations with respective RSRP metrics below the threshold value from a current ACS specific to the UE.

At 935, the UE 110 identifies an SRS air interface resource to use for autonomous transmission of an uplink SRS based on the selection of base stations determined at 930. For instance, the UE 110 analyzes a mapping that assigns a respective SRS air interface resource to a particular combination of base stations as further described with reference to FIG. 6.

Continuing to FIG. 9B, and in response to identifying the SRS resource, the UE 110 autonomously transmits the uplink SRS using the identified SRS air interface resource at 940. Alternatively, or additionally as part of 940, the UE 110 transmits the uplink SRS using a particular transmit antenna port as described with reference to FIG. 8. In some implementations, the UE 110 transmits multiple uplink SRSs, where the UE 110 transmits a respective uplink SRS on a respective transmit antenna port.

As part of autonomously transmitting an SRS to a base station, the UE 110 configures an uplink SRS based upon the measurements and/or metrics generated at 925. For instance, in scenarios in which the UE generates respective RSRP metrics for each broadcast signal at 925, the UE 110 analyzes each respective RSRP metric to identify the weakest RSRP metric of validated RSRP metrics (*e*.*g*., above the threshold value). The UE 110 then configures a transmit power of the uplink SRS based on the weakest RSRP metric to reach the base stations. Alternatively, or additionally, the UE generates an average power level using the link quality parameter for each broadcast signal in the set of broadcast signals, such as by averaging a subset of link quality parameters or averaging all of the link quality parameters, and determines the SRS power level based on the average power level. To select the subset of link quality parameters, the UE compares the link quality parameters (*e*.*g*., the link quality parameters generated from each broadcast signal in the set of broadcast signals) to a threshold value, and adds each link quality parameter that meets the threshold value to the subset of link quality parameters. In some implementations, the UE selects a particular target base station, such as based on link quality parameters specific to the target base station, a location of the target base station and/or a projected future location of the UE, etc., and determines the SRS power level using the link quality parameters specific to the target base station.

At 945, the base station 122 receives the uplink SRS. For instance, because the base station 122 monitors various air interface resources for the uplink SRSs as described at 915, the base station identifies when the UE 110 autonomously transmits the uplink SRS and successfully receives the uplink SRS. Further, in receiving the uplink SRS, the base station 122 identifies the SRS air interface resource(s) used by the UE 110 to transmit the uplink SRS. In response to receiving the uplink SRS and identifying the SRS air interface resource(s) used by the UE to transmit the uplink SRS, the base station 122 identifies the selection of base station(s) requested by the UE at 950. For instance, similar to that described with reference to FIG. 5, the base station 122 accesses a mapping of the identified SRS air interface resource to a particular combination of base stations.

At 955, the base station 122 forms an ACS with the selection of base stations. In at least one example, the base station forms and/or creates an ACS specific to the UE 110 as described with reference to FIG. 4. As another example, the base station forms the ACS by modifying an existing ACS, such as by removing and/or adding base stations to the ACS based on a selection of base stations identified by the UE as described with reference to FIG. 5. In forming the ACS, the base station 122 negotiates with each base station in the selection of base stations at 960. To illustrate, the base station 122 forwards UE capabilities to each base station in the selection of base stations, directs each base station in the selection to join the ACS, receives acknowledgements, and so forth. Thus, in implementations, the base station 122 acts as a master base station that coordinates the forming and/or modifying of an ACS based on input from a UE that selects the base stations to include in the ACS.

At 965, the UE 110 and the base stations communicate using the ACS specific to the UE 110. For example, the UE transmits a signal that is received by each base station in the ACS and jointly processed by the ACS to improve reception of the signal transmitted by the UE. As another example, the UE transmits a respective uplink signal to each base station in the ACS. Alternatively, or additionally, each base station in the ACS transmits a respective broadcast signal to the UE 110 for joint reception by the UE 110. In various implementations, the base station 122 schedules resources for joint communication with the UE 110 by one or more of the base stations 120 in the ACS. In implementations, the base station 122 communicates the resource schedule via the Xn interfaces 112 between the master base station 121 and the additional base stations 120 to enable joint communication with the UE 110.

UE-autonomously triggered uplink SRSs allow a UE to determine an optimal selection of base stations for an ACS and initiate forming and/or changing the ACS by quickly communicating the optimal selection to a master base station as further described. In implementations, the UE determines the optimal selection by analyzing link quality parameters that characterize the base stations' performance. Because the UE determines when to transmit the uplink SRS, rather than using a base station designated transmission time, the base station monitors SRS air interface resources allocated to the UE identify the autonomous (and UE-initiated) uplink SRS transmission. This allows the master base station to quickly receive the uplink SRS transmission (and the indication of the selected base stations) and quickly adjust the base stations included in an ACS. To illustrate, the use of UE-autonomous and/or UE-initiated uplink SRS transmissions reduces and/or eliminates timing delays related to the UE waiting for command(s) from the base station and/or delays related to synchronizing the uplink SRS transmissions to transmission times designated by the base station.

To further illustrate, consider a moving UE, such as that described with reference to FIG. 5, that uses uplink SRS transmissions to quickly communicate changes at a particular point in time and/or location based on information about how the UE receives signals from each base station. Since the UE is moving, the transmission environment may rapidly change as the UE moves into an urban canyon or a location with disruptive objects. By the UE quickly identifying a change and communicating the change through an uplink SRS, the base station can quickly respond to the request relative to conventional techniques (*e*.*g*., base station designated transmission times, multiple communication exchanges). This improves data rates, data throughput, and reliability more quickly than the conventional techniques.

### Example Methods

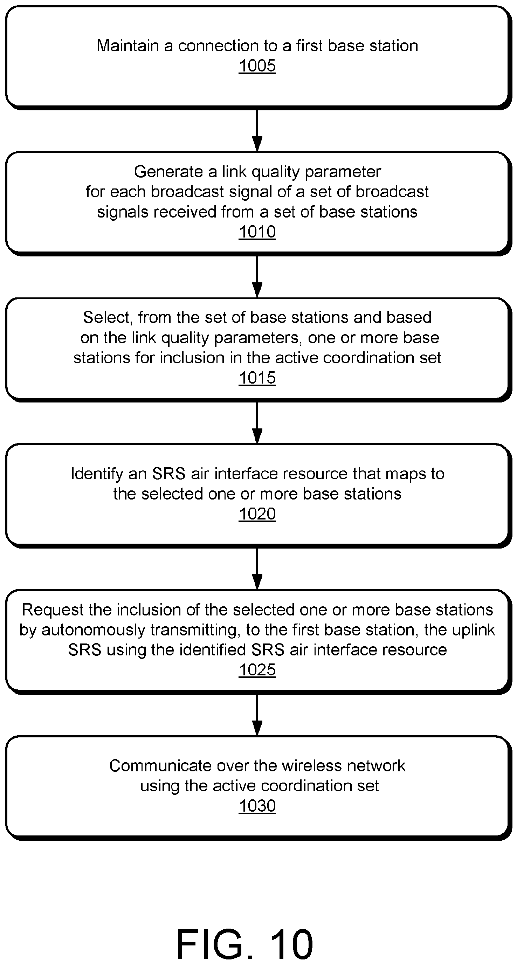

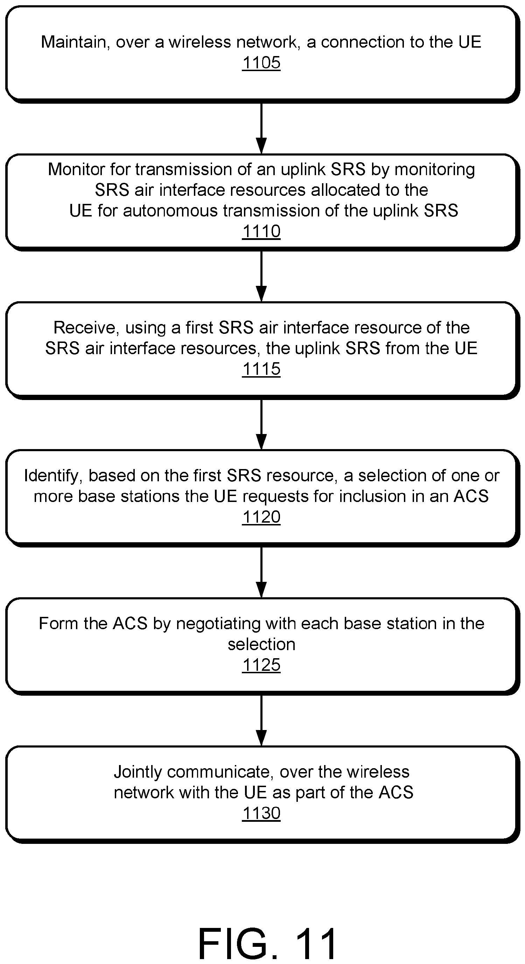

Example methods 1000 and 1100 are described with reference to FIGs. 10 and 11 in accordance with one or more aspects of user equipment-autonomously triggered-sounding reference signals. The order in which the method blocks are described are not intended to be construed as a limitation, and any number of the described method blocks can be skipped or combined in any order to implement a method or an alternative method. Generally, any of the components, modules, methods, and operations described herein can be implemented using software, firmware, hardware (*e*.*g*., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively, or in addition, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like.

FIG. 10 illustrates example method(s) 1000 of user equipment-autonomously triggered-sounding reference signals. In implementations, a user equipment performs operations included in the method 1000, such as the UE 110 described with reference to FIGs. 1-9B.

At 1005, the UE establishes and maintains a connection to a first base station. For example, the UE (*e*.*g*., UE 110) maintains a connection to the first base station (*e*.*g*., base station 122) in a wireless network as described at 905 of FIG. 9A. In some implementations, the UE 110 maintains a single wireless connection to the base station 122 as described with reference to the environment 400. Alternatively, or additionally, the UE 110 communicates using an ACS that includes a connection to the base station 122, such as described with reference to FIG. 5 and/or the environment 402 of FIG. 4.

At times, the UE 110 receives indication of an allocation of sounding-reference-signal air interface resources (SRS air interface resources) from the base station 122 while maintaining the connection. For instance, as described at 910 of FIG. 9A, the UE receives autonomous-SRS parameters from the base station, such as an indication of an allocation of SRS air interface resources and/or a mapping that assigns each respective SRS air interface resource in the allocation to a respective combination of base stations in a set of base stations. The SRS air interface resources can include any suitable combination of transmission parameters and/or transmission characteristics, such as a specific bandwidth portion; a time slot; a timing symbol; a transmission and/or timing pattern, or a cyclic shift configuration. Alternatively, or additionally, the UE receives an indication from the base station 122 that indicates one or more transmit antenna ports and/or mappings of the transmit antenna ports to the SRS air interface, such as described with reference to FIG. 8. In implementations, the UE 110 receives the indication of the autonomous-SRS parameters (*e*.*g*., allocation of SRS air interface, mappings, transmit antenna ports, threshold values) in an RRC (radio-resource-control) message, such as an RRC connection setup (radio-resource-control connection-setup) message or an RRC connection reconfiguration (radio-resource-control connection-reconfiguration) message.

At 1010, the UE generates a link quality parameter for each broadcast signal of a set of broadcast signals received from a set of base stations. For example, the UE (*e*.*g*., UE 110), generates link quality parameters for a set of broadcast signals (*e*.*g*., broadcast signal 406, broadcast signal 408, broadcast signal 410), where each broadcast signal in the set of broadcast signals is received from a respective base station of the set of base stations (*e*.*g*., base station 121, base station 123, base station 124) as described at 925 of FIG. 9A. The set of base stations can include multiple base stations or a single base station. In one or more implementations, the UE 110 generates reference signal receive power metrics (RSRP metrics) for each broadcast signal in the set of broadcast signals.

Using the link quality parameter(s) generated at 1010, the UE selects, from the set of base stations, one or more base stations for inclusion in the ACS at 1015. For example, the UE (*e.g.,* UE 110) selects the one or more base stations (*e*.*g*., selection 712) from a set of base stations (*e*.*g*., base station 121, base station 123, base station 124) for inclusion in the ACS based on the link quality parameter(s). In one or more implementations, as described at 910 and at 930 of FIG. 9A, the UE 110 receives a threshold value from the base station and compares the link quality parameter generated from each broadcast signal, such as RSRP metrics, generated at 1010 and described with reference at 925 of FIG. 9A, to the threshold value. The UE 110 then adds each base station with a respective link quality parameter (*e*.*g*., an RSRP metric) above the threshold value to the selection as illustrated in FIG. 6.

At 1020, the UE identifies an SRS air interface resource that maps to the selection of the one or more base stations. The UE (*e*.*g*., UE 110), for instance, identifies the SRS air interface resource based on a mapping received from the base station 122 as described at 910 and at 935 of FIG. 9A.

At 1025, the UE requests the inclusion of the selected one or more base stations by autonomously transmitting, to the first base station, the uplink SRS using the identified SRS air interface resource. For example, the UE (*e*.*g*., UE 110) requests the inclusion of the selected one or more base station (*e*.*g*., selection 712) by autonomously transmitting the uplink SRS (*e*.*g*., SRS 614) to the base station (*e*.*g*., base station 122) as described at 940 of FIG. 9B. In other words, the UE determines when to initiate the transmission of the uplink SRS, such as in response to the UE identifying base stations with stronger received signal power than a current base stations included in an ACS, rather than transmitting the uplink SRS in response to receiving a command from the base station to transmit the uplink SRS at a designated transmission time. In some implementations, the UE 110 determines the SRS power level based on the link quality parameter(s) generated at 1010. For example, the UE 110 identifies, from the link quality parameters (*e*.*g*., RSRP metrics), a weakest power metric value. The UE 110 then determines the SRS power level based on the weakest power metric value, such as by increasing the SRS power level to reach base stations with weaker signals.

Alternatively, or additionally, the UE generates an average power level using the link quality parameter for each broadcast signal in the set of broadcast signals, such as by averaging a subset of link quality parameters or averaging all of the link quality parameters, and determines the SRS power level based on the average power level. To select the subset of link quality parameters, the UE compares the link quality parameters (*e*.*g*., the link quality parameters generated from each broadcast signal in the set of broadcast signals) to a threshold value, and adds each link quality parameter that meets the threshold value to the subset of link quality parameters. In some implementations, the UE selects a particular target base station, such as based on link quality parameters specific to the target base station, a location of the target base station and/or a projected future location of the UE, etc., and determines the SRS power level using the link quality parameters specific to the target base station.

In one or more implementations, the UE 110 transmits the uplink SRS using particular transmit antenna port(s) as illustrated in FIG. 8. For example, the UE 110 receives, from the base station, a second mapping that assigns transmit antenna ports to the sounding-reference-signal resources of the allocation. The UE 110 then identifies the particular transmit antenna port(s) from the second mapping based on the SRS air interface resource identified at 1020.

At 1030, the UE communicates over the wireless network using the ACS. To illustrate, the UE (*e.g.,* UE 110) communicates using the ACS (*e.g.,* ACS 412, ACS 506, ACS 510, ACS 514) as described at 965 of FIG. 9B. In one or more implementations, the UE 110 transmits an uplink signal that is received by each base station in the ACS. Alternatively, or additionally, the UE 110 receives multiple signals from the ACS (*e*.*g*., a respective broadcast signals from each base station in the ACS). At times, the UE 110 transmits multiple uplink signals (*e*.*g*., a respective uplink signal to each base station in the ACS).

FIG. 1100 illustrates example method(s) 1100 of user equipment-autonomously triggered-sounding reference signals. In implementations, a base station performs operations included in the method 1100, such as the base station 122 described with reference to FIGs. 1-9B.

At 1105, the base station maintains, over a wireless network, a connection to a UE. For example, the base station (*e*.*g*., base station 122) maintains a connection to the UE (*e*.*g*., UE 110) over a wireless network as described at 905 of FIG. 9A. In some implementations, the base station maintains a single wireless connection to the UE 110 as described with reference to the environment 400. Alternatively, or additionally, the base station 122 communicates with the UE 110 as part of an ACS (*e*.*g*., ACS 412, ACS 506, ACS 510, ACS 514).

In some implementations, while maintaining the connection to the UE, the base station 122 allocates the SRS air interface resources to the UE for autonomous transmission of the uplink SRS. For instance, in some implementations, the base station allocates UE-specific SRS air interface resources based on an estimated location of the UE, where the estimated location can be obtained by analyzing communications (*e*.*g*., identifying as angle of arrival of a signal from the UE, a signal strength of the signal). Alternatively, or additionally the base station sends an indication of the allocated SRS air interface resources, such as by communicating the autonomous-SRS parameters as described at 910 of FIG. 9A and FIG. 5. To illustrate, the base station 122 sends an indication of the allocation in an RRC message, such as an RRC connection setup message or an RRC connection reconfiguration message. In allocating the SRS air interface resources, the base station 122 allocates and/or assign any combination of air interface resources and/or transmission characteristics as the SRS air interface resource, such as any combination of a specific bandwidth portion, a time slot, a timing symbol, a transmission and/or timing pattern, a cyclic shift configuration, or a modulation and/or coding scheme.

At times, the base station 122 sends, to the UE 110, a mapping that assigns each respective SRS air interface resource in the allocation to a respective combination of base stations in a set of base stations. The base station determines the combination of base stations in any suitable manner, such as by using the estimated UE location to access historical records that indicate signal measurements of neighboring base stations, by querying base stations for location information, and so forth. Alternatively, or additionally, the base station 122 sends, to the UE 110, a second mapping that maps antenna ports to the sounding-reference-signal resources in the allocation, such as that illustrated and described with reference to FIG. 8. In one or more implementations, the base station 122 sends, to the UE 110, a threshold value that indicates an acceptable performance level (e.g., an acceptable RSRP level).

At 1110, the base station monitors for transmission of an uplink SRS by monitoring SRS air interface resources allocated to the UE for autonomous transmission of the uplink SRS. For example, as described at 915 of FIG. 9A and 945 of FIG. 9B, the base station (e.g., base station 122) monitors the SRS air interface resource(s) allocated and indicated to the UE at 910 of FIG. 9A, where the SRS air interface resources are UE-specific (*e*.*g*., allocated specific to the UE) and for autonomous transmission of the uplink SRS without the base station indicating a designated transmission time to the UE for the uplink SRS.

At 1115, the base station receives, using a first SRS air interface resource of the SRS air interface resources, the uplink SRS from the UE. The base station (*e*.*g*., base station 122), for instance, receives the uplink SRS from the UE (*e.g.,* UE 110) as described at 945 of FIG. 9B. In some implementations, the base station receives the uplink SRS by monitoring the SRS air interface resources as described at 1110, and identifying when the first SRS air interface resource is in use.

At 1120, the base station identifies, based on the first SRS resource, a selection of one or more base stations the UE requests for inclusion in the ACS. To illustrate, as described at 950 of FIG. 9B, the base station (*e*.*g*., base station 122) identifies the selection of base station(s) requested by the UE (*e*.*g*., UE 110) for forming and/or modifying an ACS, such as by accessing a mapping (*e*.*g*., mapping 610).

At 1125, the base station forms the ACS by negotiating with each base station in the selection requested by the UE. In one or more implementations, the base station (*e*.*g*., base station 122) forms a new ACS specific to the UE 110 as described at 955 of FIG. 9B and/or FIG. 4. Alternatively, or additionally, the base station (*e*.*g.*, base station 122) modifies an existing ACS as described with reference to FIG. 5. In some implementations, the ACS may be a component of, or used to implement, a UCNC network architecture. Afterward, at 1130, the base station jointly communicates, over the wireless network, with the UE as part of the ACS.

Although aspects of user equipment-autonomously triggered-sounding reference signals have been described in language specific to features and/or methods, the subject of the appended claims is not necessarily limited to the specific features or methods described. Rather, the specific features and methods are disclosed as example implementations of user equipment-autonomously triggered-sounding reference signals, and other equivalent features and methods are intended to be within the scope of the appended claims. Further, various different aspects are described, and it is to be appreciated that each described aspect can be implemented independently or in connection with one or more other described aspects.

## Claims

1. A method performed by a user equipment, UE (110), for autonomously triggering transmission of an uplink sounding reference signal, SRS (614), that indicates, to a first base station (122), a selection of base stations for inclusion in an active coordination set, ACS (412), specific to the UE, the ACS comprising a set of two or more base stations (122, 123, 124) that are determined by the UE to be usable for joint communication between the UE and the ACS, the method comprising:
generating (1010) a link quality parameter for each broadcast signal (404, 406, 408, 410) in a set of broadcast signals received from a set of base stations (121, 122, 123, 124);
selecting (1015), from the set of base stations (121, 122, 123, 124) and based on the link quality parameter for each broadcast signal (404, 406, 408, 410) in the set of broadcast signals, one or more base stations (122, 123, 124) for inclusion in the ACS (412);
identifying (1020) an SRS air interface resource (608) that maps to the selected one or more base stations (122, 123, 124);
requesting (1025) the inclusion of the selected one or more base stations (122, 123, 124) in the ACS (412) by autonomously transmitting, to the first base station (122), the uplink SRS (614) using the identified SRS air interface resource (608); and
communicating (1030) over a wireless network using the ACS (412) formed with the selected one or more base stations (122, 123, 124).

2. The method as recited in claim 1, further comprising:
determining an SRS power level for the uplink SRS (614) based on the link quality parameter.

3. The method as recited in claim 2, wherein determining the SRS power level comprises:
identifying a weakest power metric value by analyzing the link quality parameter for each broadcast signal (404, 406, 408, 410) in the set of broadcast signals, and determining the SRS power level based on the weakest power metric value; or
generating an average power level using the link quality parameter for each broadcast signal (404, 406, 408, 410) in the set of broadcast signals, and determining the SRS power level based on the average power level.

4. The method as recited in claim 3, wherein generating the average power level comprises:
selecting a subset of link quality parameters by:
comparing the link quality parameter for each broadcast signal (404, 406, 408, 410) in the set of broadcast signals to a threshold value (706); and
adding the link quality parameter to the subset of link quality parameters if the link quality parameter meets the threshold value (706); and
generating an average power level using the subset of link quality parameters.

5. The method as recited in any one of claims 1 to 4, wherein selecting (1015) one or more base stations (122, 123, 124) comprises:
receiving, from the first base station (122), a threshold value;
comparing the link quality parameter for each broadcast signal (404, 406, 408, 410) in the set of broadcast signals to the threshold value; and
adding each base station, in the set of base stations, with a respective link quality parameter above the threshold value to the selected one or more base stations (122, 123, 124).

6. The method as recited in any one of the preceding claims, further comprising:
receiving, from the first base station (122), an indication of an allocation of SRS air interface resources.

7. The method as recited in claim 6, further comprising:
receiving, from the first base station (122), a first mapping (610) that assigns each respective SRS air interface resource in the allocation to a respective combination of base stations in the set of base stations (121, 122, 123, 124).

8. The method as recited in claim 6 or claim 7, further comprising:
receiving, from the first base station (122), a second mapping (804) that maps the SRS air interface resources to antenna ports of the UE (110), and
wherein transmitting the uplink SRS (614) further comprises:
identifying an antenna port from the second mapping (804) based on the identified SRS air interface resource (608); and
transmitting the uplink SRS (614) using the antenna port.

9. A method performed by a base station (122) for forming an active coordination set, ACS (412), specific to a user equipment, UE (110), based on an uplink sounding reference signal, SRS (614), from the UE, the ACS comprising a set of two or more base stations (122, 123, 124) that are determined by the UE to be usable for joint communication between the UE and the ACS, the method comprising:
monitoring (1110) for transmission of the uplink SRS (614) by monitoring SRS air interface resources (604, 606, 608) allocated to the UE (110) for autonomous transmission of the uplink SRS;
receiving (1115), over a wireless network and using a first SRS air interface resource (608) of the SRS air interface resources (604, 606, 608), the uplink SRS (614) from the UE (110);
identifying (1120), based on the first SRS air interface resource (608), a selection of one or more base stations (122, 123, 124) the UE (110) requests for inclusion in the ACS (412);
forming (1125) the ACS (412) by negotiating with each base station (123, 124) in the selection; and
jointly communicating (1130), over the wireless network, with the UE (110) as part of the ACS (412).

10. The method as recited in claim 9, further comprising:
allocating the SRS air interface resources (604, 606, 608) to the UE (110); and
transmitting an indication of the SRS air interface resources (604, 606, 608) to the UE (110).

11. The method as recited in claim 9 or claim 10, further comprising:
selecting the SRS air interface resources (604, 606, 608) based on an estimated location of the UE (110).

12. The method as recited in claim 11, wherein selecting the SRS air interface resources (604, 606, 608) further comprises:
selecting UE-specific SRS air interface resources based on at least one of:
an angle of arrival of a received signal from the UE (110); or
a signal strength of the received signal.

13. The method as recited in any one of claims 9 to 12, further comprising:
sending, prior to receiving (1115) the uplink SRS (614), a mapping (610) that assigns each respective SRS air interface resource in the SRS air interface resources (604, 606, 608) to a respective combination of base stations in a set of base stations (121, 122, 123, 124).

14. The method as recited in any one of claims 9 to 13, further comprising:
sending, to the UE (110) and prior to receiving (1115) the uplink SRS (614), a second mapping (804) that assigns respective UE antenna ports to respective SRS air interface resources in the SRS air interface resources (604, 606, 608).

15. An apparatus comprising:
at least one wireless transceiver;
a processor; and
computer-readable storage media comprising instructions, responsive to execution by the processor, for directing the apparatus to perform any one of the methods recited in claims 1 to 14 using the at least one wireless transceiver.

## Patentansprüche

1. Verfahren, durchgeführt durch eine Benutzereinrichtung, UE (110), zum autonomen Auslösen einer Übertragung eines Aufwärtsstrecken-Sondierungsreferenzsignals, SRS (614), das einer ersten Basisstation (122) eine Auswahl von Basisstationen zur Einbeziehung in einen für die UE spezifischen aktiven Koordinierungssatz, ACS (412) angibt, wobei der ACS einen Satz von zwei oder mehr Basisstationen (122, 123, 124) umfasst, die durch die UE als für eine gemeinschaftliche Kommunikation zwischen der UE und dem ACS verwendbar bestimmt werden, wobei das Verfahren Folgendes umfasst:
Erzeugen (1010) eines Verbindungsqualitätsparameters für jedes Rundsendesignal (404, 406, 408, 410) in einem Satz von Rundsendesignalen, die von einem Satz von Basisstationen (121, 122, 123, 124) empfangen werden;
Auswählen (1015) einer oder mehrerer Basisstationen (122, 123, 124) zur Einbeziehung in den ACS (412) aus dem Satz von Basisstationen (121, 122, 123, 124) und auf der Grundlage des Verbindungsqualitätsparameters für jedes Rundsendesignal (404, 406, 408, 410) in dem Satz von Rundsendesignalen,
Identifizieren (1020) einer SRS-Luftschnittstellenressource (608), die zu den ausgewählten einen oder mehreren Basisstationen (122, 123, 124) zuordnet;
Anfordern (1025) der Einbeziehung der ausgewählten einen oder mehreren Basisstationen (122, 123, 124) in den ACS (412) durch autonomes Übertragen des Aufwärtsstrecken-SRS (614) an die erste Basisstation (122) unter Verwendung der identifizierten SRS-Luftschnittstellenressource (608); und
Kommunizieren (1030) über ein drahtloses Netzwerk unter Verwendung des ACS (412), der mit den ausgewählten einen oder mehreren Basisstationen (122, 123, 124) gebildet ist.

2. Verfahren nach Anspruch 1, ferner Folgendes umfassend:
Bestimmen eines SRS-Leistungspegels für das Aufwärtsstrecken-SRS (614) auf der Grundlage des Verbindungsqualitätsparameters.

3. Verfahren nach Anspruch 2, wobei das Bestimmen des SRS-Leistungspegels Folgendes umfasst:
Identifizieren eines Werts der schwächsten Leistungsmetrik durch Analysieren des Verbindungsqualitätsparameters für jedes Rundsendesignal (404, 406, 408, 410) in dem Satz von Rundsendesignalen, und Bestimmen des SRS-Leistungspegels auf der Grundlage des Werts der schwächsten Leistungsmetrik; oder
Erzeugen eines durchschnittlichen Leistungspegels unter Verwendung des Verbindungsqualitätsparameters für jedes Rundsendesignal (404, 406, 408, 410) in dem Satz von Rundsendesignalen, und Bestimmen des SRS-Leistungspegels auf der Grundlage des durchschnittlichen Leistungspegels.

4. Verfahren nach Anspruch 3, wobei das Erzeugen des durchschnittlichen Leistungspegels Folgendes umfasst:
Auswählen einer Teilmenge von Verbindungsqualitätsparametern durch:
Vergleichen des Verbindungsqualitätsparameters für jedes Rundsendesignal (404, 406, 408, 410) in dem Satz von Rundsendesignalen mit einem Schwellenwert (706); und
Hinzufügen des Verbindungsqualitätsparameters zu der Teilmenge von Verbindungsqualitätsparametern, falls der Verbindungsqualitätsparameter den Schwellenwert (706) erfüllt; und
Erzeugen eines durchschnittlichen Leistungspegels unter Verwendung der Teilmenge von Verbindungsqualitätsparametern.

5. Verfahren nach einem der Ansprüche 1 bis 4, wobei das Auswählen (1015) einer oder mehrerer Basisstationen (122, 123, 124) Folgendes umfasst:
Empfangen eines Schwellenwerts von der ersten Basisstation (122);
Vergleichen des Verbindungsqualitätsparameters für jedes Rundsendesignal (404, 406, 408, 410) in dem Satz von Rundsendesignalen mit dem Schwellenwert; und
Hinzufügen jeder Basisstation in dem Satz von Basisstationen mit einem jeweiligen Verbindungsqualitätsparameter oberhalb des Schwellenwerts zu den ausgewählten einen oder mehreren Basisstationen (122, 123, 124).

6. Verfahren nach einem der vorhergehenden Ansprüche, ferner Folgendes umfassend:
Empfangen einer Angabe einer Zuteilung von SRS-Luftschnittstellenressourcen von der ersten Basisstation (122).

7. Verfahren nach Anspruch 6, ferner Folgendes umfassend:
Empfangen einer ersten Zuordnung (610) von der ersten Basisstation (122), die jede jeweilige SRS-Luftschnittstellenressource in der Zuteilung einer jeweiligen Kombination von Basisstationen in dem Satz von Basisstationen (121, 122, 123, 124) zuweist.

8. Verfahren nach Anspruch 6 oder Anspruch 7, ferner Folgendes umfassend:
Empfangen einer zweiten Zuordnung (804) von der ersten Basisstation (122), welche die SRS-Luftschnittstellenressourcen Antennenports der UE (110) zuordnet, und
wobei das Übertragen des Aufwärtsstrecken-SRS (614) ferner Folgendes umfasst:
Identifizieren eines Antennenports aus der zweiten Zuordnung (804) auf der Grundlage der identifizierten SRS-Luftschnittstellenressource (608); und
Übertragen des Aufwärtsstrecken-SRS (614) unter Verwendung des Antennenports.

9. Verfahren, durchgeführt durch eine Basisstation (122), zum Bilden eines für eine Benutzerausrüstung, UE (110), spezifischen aktiven Koordinierungssatzes, ACS (412), auf der Grundlage eines Aufwärtsstrecken-Sondierungsreferenzsignals, SRS (614), von der UE, wobei der ACS einen Satz von zwei oder mehr Basisstationen (122, 123, 124) umfasst, die durch die UE als für eine gemeinschaftliche Kommunikation zwischen der UE und dem ACS verwendbar bestimmt werden, wobei das Verfahren Folgendes umfasst:
Überwachen (1110) auf Übertragung des Aufwärtsstrecken-SRS (614) durch Überwachen von SRS-Luftschnittstellenressourcen (604, 606, 608), die der UE (110) für eine autonome Übertragung des Aufwärtsstrecken-SRS zugeteilt werden;
Empfangen (1115) des Aufwärtsstrecken-SRS (614) von der UE (110) über ein drahtloses Netzwerk und unter Verwendung einer ersten SRS-Luftschnittstellenressource (608) der SRS-Luftschnittstellenressourcen (604, 606, 608);
Identifizieren (1120) einer Auswahl von einer oder mehreren Basisstationen (122, 123, 124), welche die UE (110) zur Einbeziehung in den ACS (412) anfordert, auf der Grundlage der ersten SRS-Luftschnittstellenressource (608);
Bilden (1125) des ACS (412) durch Verhandeln mit jeder Basisstation (123, 124) in der Auswahl; und
gemeinschaftliches Kommunizieren (1130) mit der UE (110) als Teil des ACS (412) über das drahtlose Netzwerk.

10. Verfahren nach Anspruch 9, ferner Folgendes umfassend:
Zuteilen der SRS-Luftschnittstellenressourcen (604, 606, 608) zu der UE (110); und
Übertragen einer Angabe der SRS-Luftschnittstellenressourcen (604, 606, 608) an die UE (110).

11. Verfahren nach Anspruch 9 oder Anspruch 10, ferner Folgendes umfassend:
Auswählen der SRS-Luftschnittstellenressourcen (604, 606, 608) auf der Grundlage eines geschätzten Standorts der UE (110).

12. Verfahren nach Anspruch 11, wobei das Auswählen der SRS-Luftschnittstellenressourcen (604, 606, 608) ferner Folgendes umfasst:
Auswählen von UE-spezifischen SRS-Luftschnittstellenressourcen auf der Grundlage von mindestens einem von Folgendem:
ein Ankunftswinkel eines empfangenen Signals von der UE (110); oder
eine Signalstärke des empfangenen Signals.

13. Verfahren nach einem der Ansprüche 9 bis 12, ferner Folgendes umfassend:
Senden, vor dem Empfangen (1115) des Aufwärtsstrecken-SRS (614), einer Zuordnung (610), die jede jeweilige SRS-Luftschnittstellenressource in den SRS-Luftschnittstellenressourcen (604, 606, 608) einer jeweiligen Kombination von Basisstationen in einem Satz von Basisstationen (121, 122, 123, 124) zuweist.

14. Verfahren nach einem der Ansprüche 9 bis 13, ferner Folgendes umfassend:
Senden einer zweiten Zuordnung (804) an die UE (110) und vor dem Empfangen (1115) des Aufwärtsstrecken-SRS (614), die jeweilige UE-Antennenports jeweiligen SRS-Luftschnittstellenressourcen in den SRS-Luftschnittstellenressourcen (604, 606, 608) zuweist.

15. Vorrichtung, Folgendes umfassend:
mindestens einen drahtlosen Sendeempfänger;
einen Prozessor; und
computerlesbare Speichermedien, die Anweisungen umfassen, die auf eine Ausführung durch den Prozessor reagieren, um die Vorrichtung anzuweisen, eines der Verfahren nach Ansprüchen 1 bis 14 unter Verwendung des mindestens einen drahtlosen Sendeempfängers durchzuführen.

## Revendications

1. Procédé réalisé par un équipement utilisateur (UE) (110), pour déclencher de manière autonome une transmission d'un signal de référence de sondage, SRS, de liaison montante (614), qui indique, à une première station de base (122), une sélection de stations de base à inclure dans un ensemble de coordination active, ACS (412), spécifique à l'UE, l'ACS comprenant un ensemble de deux stations de base (122, 123, 124) ou plus qui sont déterminées par l'UE comme étant utilisables pour une communication conjointe entre l'UE et l'ACS, le procédé comprenant les étapes consistant à :
générer (1010) un paramètre de qualité de liaison pour chaque signal de diffusion (404, 406, 408, 410) dans un ensemble de signaux de diffusion reçus d'un ensemble de stations de base (121, 122, 123, 124) ;
sélectionner (1015), parmi l'ensemble de stations de base (121, 122, 123, 124) et sur la base du paramètre de qualité de liaison pour chaque signal de diffusion (404, 406, 408, 410) dans l'ensemble de signaux de diffusion, une ou plusieurs stations de base (122, 123, 124) à inclure dans l'ACS (412) ;
identifier (1020) une ressource d'interface aérienne SRS (608) qui met en correspondance avec les une ou plusieurs stations de base (122, 123, 124) sélectionnées ;
demander (1025) l'inclusion des une ou plusieurs stations de base (122, 123, 124) sélectionnées dans l'ACS (412) en transmettant de manière autonome, à la première station de base (122), le SRS de liaison montante (614) en utilisant la ressource d'interface aérienne SRS (608) identifiée ; et
communiquer (1030) sur un réseau sans fil en utilisant l'ACS (412) formé avec les une ou plusieurs stations de base (122, 123, 124) sélectionnées.

2. Procédé selon la revendication 1, comprenant en outre l'étape consistant à :
déterminer un niveau de puissance SRS pour le SRS de liaison montante (614) sur la base du paramètre de qualité de liaison.

3. Procédé selon la revendication 2, dans lequel la détermination du niveau de puissance SRS comprend les étapes consistant à :
identifier une valeur métrique de puissance la plus faible en analysant le paramètre de qualité de liaison pour chaque signal de diffusion (404, 406, 408, 410) dans l'ensemble de signaux de diffusion, et déterminer le niveau de puissance SRS sur la base de la valeur métrique de puissance la plus faible ; ou
générer un niveau de puissance moyen en utilisant le paramètre de qualité de liaison pour chaque signal de diffusion (404, 406, 408, 410) dans l'ensemble de signaux de diffusion, et déterminer le niveau de puissance SRS sur la base du niveau de puissance moyen.

4. Procédé selon la revendication 3, dans lequel la génération du niveau de puissance moyen comprend l'étape consistant à :
sélectionner un sous-ensemble de paramètres de qualité de liaison par :
la comparaison du paramètre de qualité de liaison pour chaque signal de diffusion (404, 406, 408, 410) dans l'ensemble de signaux de diffusion à une valeur seuil (706) ; et
l'ajout du paramètre de qualité de liaison au sous-ensemble de paramètres de qualité de liaison si le paramètre de qualité de liaison atteint la valeur seuil (706) ; et
la génération d'un niveau de puissance moyen à l'aide du sous-ensemble de paramètres de qualité de liaison.

5. Procédé selon l'une quelconque des revendications 1 à 4, dans lequel la sélection (1015) d'une ou de plusieurs stations de base (122, 123, 124) comprend les étapes consistant à :
recevoir, de la première station de base (122), une valeur seuil ;
comparer le paramètre de qualité de liaison pour chaque signal de diffusion (404, 406, 408, 410) dans l'ensemble de signaux de diffusion à la valeur seuil ; et
ajouter chaque station de base, dans l'ensemble de stations de base, avec un paramètre de qualité de liaison respectif supérieur à la valeur seuil, aux une ou plusieurs stations de base (122, 123, 124) sélectionnées.

6. Procédé selon l'une quelconque des revendications précédentes, comprenant en outre l'étape consistant à :
recevoir, de la première station de base (122), une indication d'une attribution de ressources d'interface aérienne SRS.

7. Procédé selon la revendication 6, comprenant en outre l'étape consistant à :
recevoir, de la première station de base (122), une première mise en correspondance (610) qui alloue chaque ressource d'interface aérienne SRS respective dans l'attribution à une combinaison respective de stations de base dans l'ensemble de stations de base (121, 122, 123, 124).

8. Procédé selon la revendication 6 ou la revendication 7, comprenant en outre l'étape consistant à :
recevoir, de la première station de base (122), une deuxième mise en correspondance (804) qui met en correspondance les ressources d'interface aérienne SRS avec des ports d'antenne de l'UE (110), et
dans lequel la transmission du SRS de liaison montante (614) comprend en outre les étapes consistant à :
identifier un port d'antenne à partir de la deuxième mise en correspondance (804) sur la base de la ressource d'interface aérienne SRS (608) identifiée ; et
transmettre le SRS de liaison montante (614) en utilisant le port d'antenne.

9. Procédé réalisé par une station de base (122) pour former un ensemble de coordination active, ACS (412), spécifique à un équipement utilisateur, UE (110), sur la base d'un signal de référence de sondage, SRS, de liaison montante (614), provenant de l'UE, l'ACS comprenant un ensemble de deux stations de base (122, 123, 124) ou plus qui sont déterminées par l'UE comme étant utilisables pour une communication conjointe entre l'UE et l'ACS, le procédé comprenant les étapes consistant à :
surveiller (1110) une transmission du SRS de liaison montante (614) par la surveillance de ressources d'interface aérienne SRS (604, 606, 608) attribuées à l'UE (110) pour une transmission autonome du SRS de liaison montante ;
recevoir (1115), sur un réseau sans fil et en utilisant une première ressource d'interface aérienne SRS (608) parmi les ressources d'interface aérienne SRS (604, 606, 608), le SRS de liaison montante (614) de l'UE (110) ;
identifier (1120), sur la base de la première ressource d'interface aérienne SRS (608), une sélection d'une ou de plusieurs stations de base (122, 123, 124) que l'UE (110) demande à inclure dans l'ACS (412) ;
former (1125) l'ACS (412) en négociant avec chaque station de base (123, 124) dans la sélection ; et
communiquer conjointement (1130), sur le réseau sans fil, avec l'UE (110) en tant que partie de l'ACS (412).

10. Procédé selon la revendication 9, comprenant en outre les étapes consistant à :
attribuer les ressources d'interface aérienne SRS (604, 606, 608) à l'UE (110) ; et
transmettre à l'UE (110) une indication des ressources d'interface aérienne SRS (604, 606, 608).

11. Procédé selon la revendication 9 ou la revendication 10, comprenant en outre l'étape consistant à :
sélectionner les ressources d'interface aérienne SRS (604, 606, 608) sur la base d'une localisation estimée de l'UE (110).

12. Procédé selon la revendication 11, dans lequel la sélection des ressources d'interface aérienne SRS (604, 606, 608) comprend en outre l'étape consistant à :
sélectionner des ressources d'interface aérienne SRS spécifiques à l'UE sur la base d'au moins un des éléments suivants :
un angle d'arrivée d'un signal reçu de l'UE (110) ; ou
une intensité de signal du signal reçu.

13. Procédé selon l'une quelconque des revendications 9 à 12, comprenant en outre l'étape consistant à :
envoyer, avant la réception (1115) du SRS de liaison montante (614), une mise en correspondance (610) qui alloue chaque ressource d'interface aérienne SRS respective dans les ressources d'interface aérienne SRS (604, 606, 608) à une combinaison respective de stations de base dans un ensemble de stations de base (121, 122, 123, 124).

14. Procédé selon l'une quelconque des revendications 9 à 13, comprenant en outre l'étape consistant à :
envoyer, à l'UE (110) et avant la réception (1115) du SRS de liaison montante (614), une deuxième mise en correspondance (804) qui alloue des ports d'antenne respectifs de l'UE à des ressources d'interface aérienne SRS respectives dans les ressources d'interface aérienne SRS (604, 606, 608).

15. Appareil comprenant :
au moins un émetteur-récepteur sans fil ;
un processeur ; et
des supports de stockage lisibles par ordinateur comprenant des instructions, répondant à une exécution par le processeur, pour ordonner à l'appareil de réaliser l'un quelconque des procédés selon les revendications 1 à 14 en utilisant l'au moins un émetteur-récepteur sans fil.
